# EUROPEAN PATENT APPLICATION

(11) **EP 4 116 248 A1**
(43) Date of publication of application: **11.01.2023**
(21) Application number: 21764608.2
(22) Date of filing: 03.03.2021
(51) Int. Cl.: B66B 3/00, B66B 17/20, H04M 11/00, H04Q 9/00, B66B 1/14, H04W 4/30, H04W 80/08

(54) **EQUIPMENT SERVER, DEVICE SERVER, COMMUNICATION SYSTEM, AND DATA STRUCTURE**

(30) Priority: 06.03.2020 JP 2020038810; 28.08.2020 JP 2020144886
(71) Applicant: MITSUBISHI ELECTRIC CORPORATION, Chiyoda-ku Tokyo 100-8310 (JP)
(72) Inventor: KAMASAKA, Hitoshi, Tokyo 100-8310 (JP); SUZUKI, Yuta, Tokyo 100-8310 (JP); NEGISHI, Keigo, Tokyo 100-8310 (JP); GOMYO, Seiji, Tokyo 100-8310 (JP)
(74) Representative: Hoffmann Eitle
(86) International application number: PCT/JP2021/008274
(87) International publication number: WO 2021/177377

(57) **Abstract**

There are provided a communication system in which a piece of equipment in a facility and a device working in the facility cooperate easily with each other, an equipment server and a device server in the communication system, and a data structure which is to be communicated in the communication system. In a communication system (1), a message is used for control of a control target by being communicated in a common format between each of equipment servers (7) and each of object servers (9). The control target is a piece (3) of building equipment as a piece of equipment or an object (4) working in a building (2) as a facility. The message includes first information, second information, and third information. The first information is information for identification of the object (4) as each of devices. The second information is information representing a transmission direction of the message. The third information is information representing a process to be executed by the control target.

## Description

### [Field]

The present disclosure relates to an equipment server, a device server, a communication system, and a data structure.

### [Background]

PTL 1 discloses an example of a system in which communication between an autonomous vehicle and an elevator is performed. In the system, the autonomous vehicle transmits a hall call signal to a relay apparatus controlled by a control panel of the elevator. The control panel causes a car of the elevator to travel to a floor on which the autonomous vehicle is waiting, on the basis of the hall call signal transmitted by the autonomous vehicle.

### [Citation List]

### [Patent Literature]

[PTL 1] JP 2010-23959 A

### [Summary]

### [Technical Problem]

However, in the system of PTL 1, a piece of equipment, such as the elevator, is controlled on the basis of a signal transmitted to the piece of equipment by an object, such as the autonomous vehicle. Here, assume that a plurality of pieces of equipment are provided in a facility, such as a building, in the system and that a plurality of devices work in the facility. In this case, a communication format needs to be defined for each of combinations of pieces of equipment and devices. Thus, coordination between pieces of equipment and devices is not easy.

The present disclosure relates to solving of the above-described problem. The present disclosure provides a communication system in which a piece of equipment in a facility and a device working in the facility cooperate easily with each other, an equipment server and a device server in the communication system, and a data structure which is to be communicated in the communication system.

### [Solution to Problem]

An equipment server according to the present disclosure includes a first communication unit that transmits and receives a message in a common data format to and from a plurality of device servers which communicate with a device in a facility and control the device, and an equipment control unit that controls a piece of equipment in the facility on the basis of a message received by the first communication unit, wherein the message includes first information for identification of the device, second information representing a transmission direction of the message, and third information representing a process related to the message.

A device server according to the present disclosure includes a second communication unit that transmits and receives a message in a common data format to and from an equipment server that controls a piece of equipment in a facility, and a device control unit that controls a device in the facility on the basis of a message received by the second communication unit, wherein the message includes first information for identification of the device, second information representing a transmission direction of the message, and third information representing a process related to the message.

A communication system according to the present disclosure includes an equipment server and a plurality of device servers, wherein the equipment server includes a first communication unit that transmits and receives a message in a common data format to and from the plurality of device servers, and an equipment control unit that controls a piece of equipment in a facility on the basis of a message received by the first communication unit, each of the plurality of device servers includes a second communication unit that transmits and receives the message in the common data format to and from the equipment server, and a device control unit that controls a device in the facility on the basis of a message received by the second communication unit, and the message includes first information for identification of the device, second information representing a transmission direction of the message, and third information representing a process related to the message.

A data structure according to the present disclosure is the data structure for a message that is to be transmitted and received in a common data format between a plurality of device servers that communicate with a device in a facility and control the device and an equipment server that controls a piece of equipment in the facility, and includes first information for identification of the device in the facility; second information representing a transmission direction of the message; and third information representing a process to be executed by a control target in the message.

### [Advantageous Effects of Invention]

The equipment server or device server or the communication system according to the present disclosure allows a piece of equipment in a facility and a device working in the facility to cooperate easily with each other. The data structure according to the present disclosure also allows a piece of equipment in a facility and a device working in the facility to cooperate easily with each other.

### [Brief Description of Drawings]

[Fig. 1] A configuration diagram of a communication system according to Embodiment 1.
[Fig. 2] A chart showing an example of a structure of a topic name in a message in the communication system according to Embodiment 1.
[Fig. 3] A sequence chart showing an example of operation of the communication system according to Embodiment 1.
[Fig. 4] A sequence chart showing an example of operation of the communication system according to Embodiment 1.
[Fig. 5] A sequence chart showing an example of operation of the communication system according to Embodiment 1.
[Fig. 6] A sequence chart showing an example of operation of the communication system according to Embodiment 1.
[Fig. 7] A sequence chart showing an example of operation of the communication system according to Embodiment 1.
[Fig. 8] A sequence chart showing an example of operation of the communication system according to Embodiment 1.
[Fig. 9] A hardware configuration diagram of the main portion of the communication system according to Embodiment 1.
[Fig. 10] A configuration diagram of a communication system according to Embodiment 2.
[Fig. 11] A flowchart showing an example of the operation of the communication system according to Embodiment 2.
[Fig. 12] A flowchart showing an example of the operation of the communication system according to Embodiment 2.
[Fig. 13] A flowchart showing an example of the operation of the communication system according to Embodiment 2.
[Fig. 14] A flowchart showing an example of the operation of the communication system according to Embodiment 2.
[Fig. 15] A configuration diagram of a communication system according to Embodiment 3.

### [Description of Embodiments]

Modes for carrying out the present disclosure will be described with reference to the accompanying drawings. Same or similar portions in the drawings are denoted by same reference characters, and a redundant description thereof will be simplified or omitted as appropriate.

### Embodiment 1.

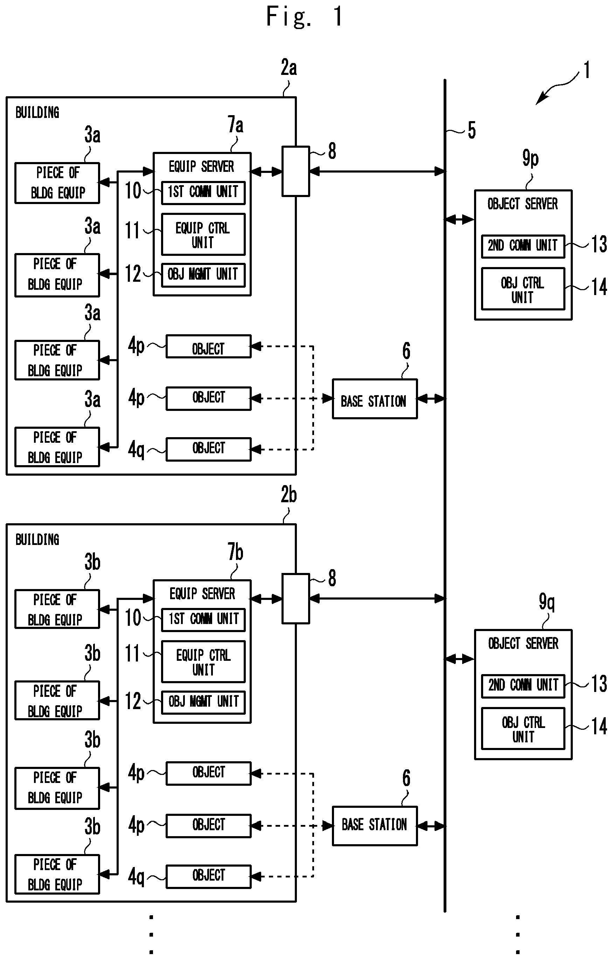

Fig. 1 is a configuration diagram of a communication system according to Embodiment 1.

A communication system 1 is a system which is applied to communication for coordination between a plurality of pieces of equipment in a facility and objects as a plurality of devices.

In this example, a facility is, for example, a construction, such as a building 2a or a building 2b. A building 2 here is a representation when no distinction is made among the building 2a, the building 2b, and the like.

In the building 2a, pieces 3a of building equipment as a plurality of pieces of equipment are provided. In the building 2b, pieces 3b of building equipment are provided. A piece 3 of building equipment here is a representation when no distinction is made among the pieces 3a of building equipment, the pieces 3b of building equipment, and the like.

A plurality of objects include, for example, a plurality of objects 4p which are manufactured by a manufacturer p, and a plurality of objects 4q which are manufactured by a manufacturer q. An object 4 here is a representation when no distinction is made among the objects 4p, the objects 4q, and the like.

The piece 3 of building equipment and the object 4 work in a facility. The piece 3 of building equipment and the object 4 are each, for example, a robot which move autonomously in the building 2 or a mobility device which move autonomously or through manipulation by a user. The piece 3 of building equipment and the object 4 may be each, for example, a wireless tag or a mobile terminal which is carried by a user moving in the building 2. The piece 3 of building equipment and the object 4 may be each, for example, a piece of equipment, such as an elevator, a passenger conveyor, an access control apparatus, a lighting apparatus, or an air-conditioning apparatus.

In the above-described example, one(s) of the plurality of objects 4p moves (move) in the building 2a. Another (others) of the plurality of objects 4p moves (move) in the building 2b. One(s) of the plurality of objects 4q moves (move) in the building 2a. Another (others) of the plurality of objects 4q moves (move) in the building 2b. The object 4 is connected to a network 5 through wireless communication. The network 5 is, for example, the Internet. The object 4 connects to the network 5 by a wireless communication standard, such as LTE (Long Term Evolution). The object 4 may connect to the network 5 via, for example, a base station 6.

The communication system 1 includes one or more equipment servers 7. In the example, the equipment servers 7 include an equipment server 7a which is provided in the building 2a and an equipment server 7b which is provided in the building 2b. The equipment server 7 here is a representation when no distinction is made among the equipment server 7a, the equipment server 7b, and the like. Each of the plurality of equipment servers 7 is connected to the network 5. The equipment server 7a controls each of the plurality of pieces 3a of building equipment in the building 2a. The equipment server 7a is connected to the network 5 via a firewall 8 in the building 2a. The equipment server 7b controls each of the plurality of pieces 3b of building equipment in the building 2b. The equipment server 7b is connected to the network 5 via the firewall 8 in the building 2b. The equipment server 7 is, for example, an edge server in the corresponding building 2. Some or all components of the equipment server 7 may be provided on the cloud. In this case, the equipment server 7 connects to the piece 3 of building equipment via the network 5. The equipment server 7 may connect to the piece 3 of building equipment via the base station 6. The equipment server 7 may connect to the piece 3 of building equipment through the firewall 8.

The communication system 1 includes a plurality of object servers 9 as device servers. In this example, the plurality of object servers 9 include an object server 9p and an object server 9q which are managed by managers different from each other. The object server 9 here is a representation when no distinction is made among the object server 9p, the object server 9q, and the like. A manager of the object server 9 is, for example, a manufacturer of the object 4 or a management agent of the object 4. The manager of the object server 9p is, for example, the manufacturer p. The manager of the object server 9q is, for example, the manufacturer q. Note that a single manager may manage the plurality of object servers 9. Each of the plurality of object servers 9 is connected to the network 5. The object server 9 is a server apparatus which controls each of a plurality of objects 4 through the network 5. The object server 9p controls each of the plurality of objects 4p. The object server 9q controls each of the plurality of objects 4q.

In the communication system 1, a message is communicated between the equipment server 7 and the object server 9. In this example, a message is communicated by the MQTT (Message Queuing Telemetry Transport) protocol. In the MQTT protocol, a message is communicated between an MQTT broker and an MQTT client. An MQTT broker receives a message which is published with a designated topic by an MQTT client. If a message on a topic to which the MQTT client subscribes is published, the MQTT broker transmits the message to the MQTT client.

The equipment server 7 and the object server 9 communicate with each other in a common data format (to be described later). The object server 9 and the object 4 that is controlled by the object server 9 communicate with each other in a data format different from the common data format. The equipment server 7 and the piece 3 of building equipment that is controlled by the equipment server 7 may communicate with each other in the common data format or communicate in a data format different from the common data format. The piece 3 of building equipment communicates directly with the equipment server 7. In contrast, the object is unable to communicate directly with the equipment server 7. Communication between the piece 3 of building equipment and the object 4 is performed via the object server 9.

If the object 4 is, for example, a moving body, such as a robot or a mobility device, various types of moving bodies appropriate to moving body purposes may be manufactured by a plurality of different manufacturers. Coordination between a moving body and the equipment server 7 may be difficult due to differences between data formats used for communication by respective types of moving bodies.

If the object 4 is an elevating machine, such as an elevator, a plurality of elevators may be manufactured by a plurality of different manufacturers in a single facility. Coordination between the elevators and the equipment server 7 may be difficult due to differences between data formats used for communication by the elevators manufactured by the respective manufacturers.

A message to be communicated in the communication system 1 includes a header and a payload. The header is a portion including communication control information, such as a keep alive timer and a topic name. The keep alive timer represents a maximum time period for intervals between messages to be received from an MQTT client. In this example, the keep alive timer is set, for example, with an upper limit of two hours. If a keep alive timer is not designated in a message at the time of connection from an MQTT client or a designated keep alive timer exceeds the upper limit, an MQTT broker sets the keep alive timer to, for example, the time period as the upper limit. The payload is a portion including information used for coordination between the piece 3 of building equipment and the object 4. The message regards a piece of equipment, such as the piece 3 of building equipment, or the object 4 as a control target and is used to control the control target. The message has a data structure in the common format independent of control target type.

The equipment server 7 includes a first communication unit 10, an equipment control unit 11, and an object management unit 12.

The first communication unit 10 is a portion which communicates a message. The first communication unit 10 is connected to each of the plurality of object servers 9 through the network 5. The first communication unit 10 is connected to each of the plurality of pieces 3 of building equipment in the building 2 that the equipment server 7 corresponds to through, for example, a LAN (Local Area Network). In this example, the first communication unit 10 is equipped with an MQTT broker function. In this case, each object server 9 is equipped with an MQTT client function. When the first communication unit 10 receives a message which is published by any object server 9, the first communication unit 10 outputs information included in the message to the equipment control unit 11. The first communication unit 10 transmits and receives messages in the common data format to and from the plurality of object servers 9.

The equipment control unit 11 is a portion which controls the piece 3 of building equipment on the basis of a message when the message is received by the first communication unit 10. A plurality of equipment control units 11 may be, for example, provided for respective types of the pieces 3 of building equipment. The equipment control unit 11 may be equipped with an MQTT client function. The equipment control unit 11 publishes a message to the object 4 in accordance with a status of the piece 3 of building equipment. The first communication unit 10 transmits the message to the object server 9 that subscribes a topic of the message published by the equipment control unit 11.

The object management unit 12 is a portion which manages the objects 4 that work in the building 2 that the equipment server 7 corresponds to. The object management unit 12 may be equipped with an MQTT client function. The object management unit 12 may manage, for example, a topic to which the object server 9 can subscribe.

The object server 9 includes a second communication unit 13 and an object control unit 14.

The second communication unit 13 is a portion which communicates a message. The second communication unit 13 is connected to each of the plurality of equipment servers 7 through the network 5. The second communication unit 13 is connected to each of the plurality of objects 4 which are controlled by the object server 9 through the network 5. In this example, the second communication unit 13 is equipped with an MQTT client function. When the second communication unit 13 receives, from any equipment server 7, a message on a topic which is subscribed to, the second communication unit 13 outputs information included in the message to the object control unit 14. The second communication unit 13 communicates with the object 4 in a data format different from the common data format.

The object control unit 14 is a portion which controls the object 4 on the basis of a message when the message is received by the second communication unit 13. The object control unit 14 is an example of a device control unit. A plurality of object control units 14 may be provided for respective types of the objects 4. The object control unit 14 causes the second communication unit 13 to publish a message to the piece 3 of building equipment in accordance with a status of the object 4. The second communication unit 13 publishes the message to the first communication unit 10 of the equipment server 7 that controls the piece 3 of building equipment.

An example of message communication in the communication system 1 will be described using as an example a case where the object 4q uses the piece 3a of building equipment in the building 2a. The object 4q requests the object server 9q to publish a message to the piece 3a of building equipment that the object 4q is to use. The second communication unit 13 of the object server 9q publishes the requested message to the first communication unit 10 of the equipment server 7a.

The equipment control unit 11 of the equipment server 7a obtains the message received by the first communication unit 10 on the basis of, for example, a topic name. The equipment control unit 11 controls the piece 3a of building equipment on the basis of the obtained message. If the equipment control unit 11 controls a plurality of pieces 3a of building equipment, the equipment control unit 11 may select the piece 3a of building equipment as a control target to be controlled from among the plurality of pieces 3a of building equipment on the basis of third information of an obtained message. If the equipment control unit 11 controls a plurality of pieces 3a of building equipment, the equipment control unit 11 may select the piece 3a of building equipment as a control target to be controlled from among the plurality of pieces 3a of building equipment on the basis of position information in the building 2a of the object 4 that has requested publication of an obtained message. The position information is identified from first information of the message. The piece 3a of building equipment as the control target operates under control of the equipment control unit 11.

The piece 3a of building equipment that operates under control of the equipment server 7a may make a response to the object 4q that is to use the piece 3a of building equipment. At this time, the piece 3a of building equipment requests the equipment server 7a to publish a message to the object 4q. The first communication unit 10 of the equipment server 7a publishes a message on a topic to which the object server 9q subscribes on the basis of the request from the piece 3a of building equipment.

The second communication unit 13 of the object server 9q receives the message on the topic that is subscribed to. The object control unit 14 of the object server 9q obtains the message received by the second communication unit 13. The object control unit 14 controls the object 4q on the basis of the obtained message. The object 4q as a control target operates under control of the object control unit 14.

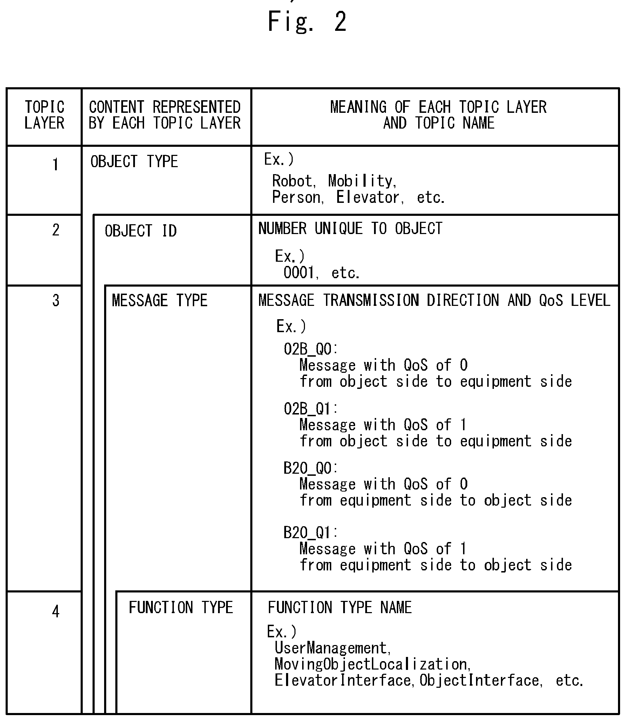

A data structure of a message to be communicated in the communication system 1 will be described using Fig. 2.

Fig. 2 is a chart showing an example of a structure of a topic name in a message in the communication system according to Embodiment 1.

As shown in Fig. 2, the topic name has a hierarchical structure. In this example, the topic name is composed of four layers from a first layer at the top to a fourth layer at the bottom.

The first layer represents an object type. The object type is information representing the type of the object 4, such as robot, mobility device, person, or elevator. Here, the object 4 whose object type is person is, for example, an object which moves while being carried by a person.

The second layer represents an object ID. The object ID is information for identification of the object 4. A value of the object ID is, for example, a number unique to the object 4, such as "O001." The object ID is an example of first information.

The third layer represents a message type. The message type includes information representing a message transmission direction. The message transmission direction is, for example, either a direction from an object side to an equipment side or a direction from the equipment side to the object side. In this example, the message transmission direction does not individually identify a transmitter and a receiver of the message. The transmission direction from the object side to the equipment side is, for example, a transmission direction in which a message is transmitted from any of the plurality of object servers 9 to any of the plurality of equipment servers 7. The transmission direction from the equipment side to the object side is, for example, a transmission direction in which a message is transmitted from any of the plurality of equipment servers 7 to any of the plurality of object servers 9. The message type may include information representing a QoS level (QoS: Quality of Service) of the message in MQTT. A message with a QoS level of 0 is a message with no guarantee of delivery which is transmitted at most once from an MQTT broker. A message with a QoS level of 1 is a message with a guarantee of delivery which is transmitted at least once from an MQTT broker. A value of the message type is, for example, a character string, such as "O2B_Q0," which is obtained by combining pieces of information on the transmission direction and the QoS level. Here, the message type "O2B_Q0" represents a message with a QoS level of 0 from the object side to the equipment side. The message type is an example of second information.

The fourth layer represents a function type. The function type is information representing the type of a function which is to be executed by a control target. A value of the function type is, for example, a character string, such as "UserManagement," "MovingObjectLocalization," "ElevatorInterface," or "ObjectInterface." In this example, the function type "UserManagement" represents the type of a management function, such as registration of information on the object 4 working in the building 2 in the object management unit 12 of the equipment server 7. The function type "MovingObjectLocalization" represents the type of a function, such as synchronization of a position state of the object 4. The function type includes, for example, updating of position information stored in a memory of the equipment server 7. Here, information on the position state of the object 4 includes, for example, information on a position and a state of the object 4. The function type "ElevatorInterface" represents the type of a function of making a request to an elevator as the piece 3 of building equipment. The function type "ObjectInterface" represents the type of a function of making a request to the object 4 working in the building 2.

Information included in a payload of the message is described in, for example, JSON format.

A message making a request to register is transmitted from the object server 9. In this example, a message requesting registration of a mobility device moving in the building 2 as the object 4 is illustrated. The registration request message is transmitted from the object server 9 to the equipment server 7, for example, when the object server 9 communicates with the equipment server 7 in the building 2 for the first time.

The data in JSON format included in the payload of the message includes "api" and the like as a key.

A value of the key "api" represents a name of an API to be used. The third information is information representing a process related to the message. The third information includes the value of the key "api." The value of the key "api" is, for example, the character string "Registration" representing a request to register. The value of the key "api" is, for example, the character string "RegistrationResult" representing an announcement of a registration result. The value of the key "api" is, for example, the character string "PositionSynchronization" representing an announcement of a position state. The value of the key "api" is, for example, the character string "PositionSynchronizationFromPF" representing a request to correct a position state. The value of the key "api" is, for example, the character string "CallElevator" representing an elevator call. The value of the key "api" is, for example, the character string "RequestFromElevator" representing an announcement of an elevator call result. The value of the key "api" is, for example, the character string "UsedStatusOfElevator" representing an elevator used status. The value of the key "api" is, for example, the character string "RequestMovement" representing a request from the equipment server 7 to the object 4. The value of the key "api" is, for example, the character string "RequestMovementResult" representing an announcement of a result of responding to a request from the equipment server 7.

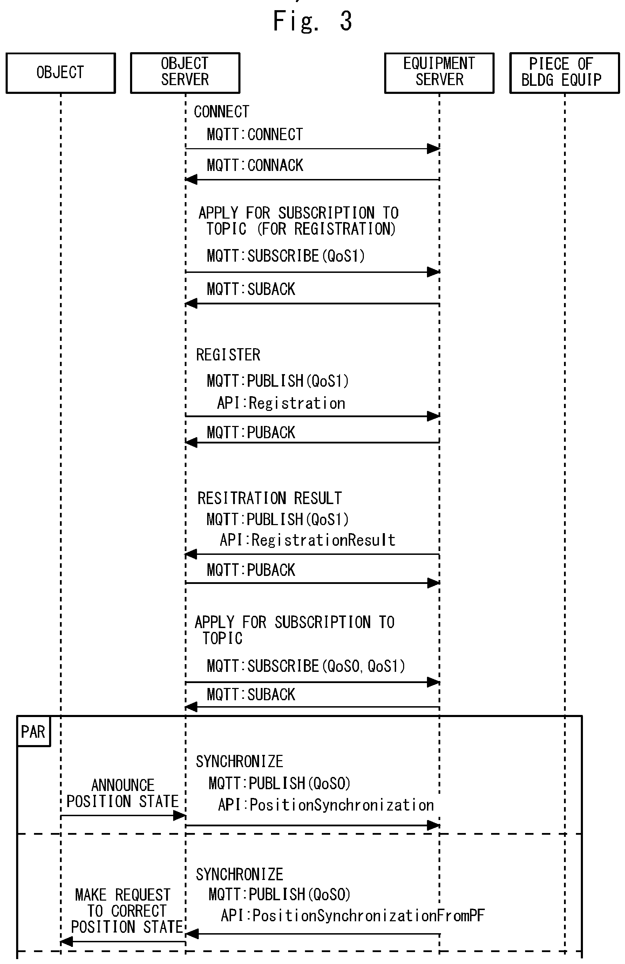

An example of operation of the communication system 1 will be described using Figs. 3 to 8.

Figs. 3 to 8 are sequence charts showing an example of operation of a communication system according to Embodiment 1.

A sequence chart in initial registration and subsequent stationary operation is shown in Fig. 3. In this example, an example of an operation of registering the object 4 in the object management unit 12 of the equipment server 7 is illustrated.

For registration of the object 4 working in the building 2, the object server 9 connects to the equipment server 7 corresponding to the building 2. The connection to the equipment server 7 is made, for example, on the basis of manipulation of the object server 9 by a manager of the object 4. The connection to the equipment server 7 may be made, for example, via the object server 9 on the basis of manipulation of the object 4 by the manager of the object 4.

The second communication unit 13 of the object server 9 transmits an MQTT CONNECT message to the first communication unit 10 of the equipment server 7. The first communication unit 10 of the equipment server 7 sends in reply an MQTT CONNACK message to the second communication unit 13 of the object server 9. With this reply, the object server 9 confirms that a MQTT-based connection to the equipment server 7 has been established. In the communication between the object server 9 and the equipment server 7, authentication based on a user name and a password may be performed.

The second communication unit 13 of the object server 9 transmits an MQTT SUBSCRIBE message with a QoS level of 1 to the first communication unit 10 of the equipment server 7 so as to subscribe to a topic for registration of the object 4. The first communication unit 10 of the equipment server 7 sends in reply an MQTT SUBACK message to the second communication unit 13 of the object server 9. With this reply, the object server 9 confirms that subscription to the topic is permitted.

The second communication unit 13 of the object server 9 transmits, to the first communication unit 10 of the equipment server 7, an MQTT PUBLISH message including information on the object 4 to be registered in a payload with a QoS level of 1. In the message, "Registration" is designated as an API. The message is published as a message configured to, for example, include a first layer of NULL, a second layer (first information) of NULL, a third layer (second information) of O2B, and a fourth layer of UserManagement in a topic name and include an API (third information) of Registration in a payload. The first communication unit 10 of the equipment server 7 sends in reply an MQTT PUBACK message to the second communication unit 13 of the object server 9. With this reply, the object server 9 confirms that publishment of the message has been accepted.

The object management unit 12 of the equipment server 7 performs a process of registering the object 4, such as object ID assignment and topic header generation, on the basis of the message received from the object server 9 by the first communication unit 10. The object management unit 12 announces a result of the registration to the first communication unit 10. In this example, the object management unit 12 publishes an MQTT PUBLISH message including information on the generated topic header in a payload as a message with a QoS level of 1 to the first communication unit 10. In the message, "RegistrationResult" is designated as an API. The message is a message configured to, for example, include a first layer of NULL, a second layer (first information) of NULL, a third layer (second information) of O2B, and a fourth layer of UserManagement in a topic name and include an API (third information) of RegistrationResult in a payload.

Since the second communication unit 13 of the object server 9 subscribes to the topic, the second communication unit 13 receives the registration result as the MQTT PUBLISH message from the first communication unit 10 of the equipment server 7. The second communication unit 13 of the object server 9 sends in reply an MQTT PUBACK message to the first communication unit 10 of the equipment server 7. With this reply, the equipment server 7 confirms that the registration result has been announced to the object server 9.

The second communication unit 13 of the object server 9 transmits MQTT SUBSCRIBE messages to the first communication unit 10 of the equipment server 7 so as to subscribe to a topic including the topic header announced in the registration result. The second communication unit 13 transmits a SUBSCRIBE message on the topic to the first communication unit 10 so as to subscribe to a message with a QoS level of 0. The second communication unit 13 also transmits a SUBSCRIBE message on the topic to the first communication unit 10 so as to subscribe to a message with a QoS level of 1. That is, the second communication unit 13 applies for subscription to a message to the object side representing an arbitrary function type in a designated version. The first communication unit 10 of the equipment server 7 sends in reply an MQTT SUBACK message to the second communication unit 13 of the object server 9. With this reply, the object server 9 confirms that the subscription to the topic applied for is permitted.

After the registration is performed in the above-described manner, the communication between the object server 9 and the equipment server 7 shifts to stationary operation. A message from the object server 9 to the equipment server 7 is communicated as a PUBLISH message from an MQTT client as a publisher to an MQTT broker. A message from the equipment server 7 to the object server 9 is communicated as a PUBLISH message from an MQTT broker to an MQTT client as a subscriber to a topic. The object server 9 identifies the object 4 that a message regards as an object on the basis of a topic header of the message.

Note that if the communication between the object server 9 and the equipment server 7 is severed, the object server 9 restarts communication by transmitting a CONNECT message again to the equipment server 7. At this time, the object server 9 designates the same temporal ID for the same object 4 and makes reconnection. With this operation, the equipment server 7 sets the same object ID as that before the severance of the communication for the same object 4.

A difference between a position state of the object 4 which the object 4 itself recognizes and position information of the object 4 which the equipment server 7 recognizes can obstruct coordination between the object 4 and the piece 3 of building equipment. For this reason, in the stationary operation, synchronization of the position state of the object 4 is performed between the object side and a moving body side. The synchronization of the position state is performed by, for example, a periodical announcement of the position state from the object side to the equipment side and a request to correct the position state from the equipment side to the object side. Note that a plurality of communication operations in the stationary operation including a position state announcement, a request to correct the position state, and the like are performed by, for example, parallel processing, as indicated by a combined fragment PAR.

In the stationary operation, a message is transmitted from the object server 9 to the equipment server 7 so as to announce the position state of the object 4. Such messages are periodically transmitted, for example, at predetermined intervals. Information on the position state of the object 4 is, for example, obtained from the object 4 by the object control unit 14.

A position state announcement message includes, in a payload, information on the position state of the object 4 as data in JSON format. Information on a position of the object 4 may include, for example, information on an orientation of the object 4. Pieces of data included in the payload include, for example, an API name designating a function on the equipment side for synchronization of the position state, an object ID for identification of the object 4 to be synchronized, and information designating a data representation of the position of the object 4. The API name is, for example, "PositionSynchronization." The position state announcement message is configured to, for example, include a first layer of Mobility, a second layer (first information) of 001, a third layer (second information) of O2B, and a fourth layer of MovingObjectLocalization in a topic name and include an API (third information) of PositionSynchronization in a payload. The data representation of the position of the object 4 is designated by a combination of a coordinate system, a system of units of, e.g., length and angle, a data type, such as integer type, real type, or string type, and the like. The coordinate system may be, for example, an absolute coordinate system representing an absolute position of the object 4 by a combination of a latitude, a longitude, and an altitude and representing the orientation of the object 4 by a bearing. The coordinate system may be, for example, a building coordinate system representing a building-unique position of the object 4 in the building by a combination of cartesian coordinates (x, y) unique to the building 2 and a floor and representing the orientation of the object 4 by an angle in the cartesian coordinates unique to the building 2. In this case, an origin in the building coordinate system may also be designated in advance. The position state announced from the object 4 is managed by, for example, the object management unit 12.

As to information on the position state of the object 4, when a request to correct the position state of the object 4 is made by the equipment server 7, the request to correct may include information on an identifier for identification of a base point for designation of a correction position of the object 4. In this case, the object server 9 prevents occurrence of a deviation in base point from the equipment server 7 by including an identifier of a last-received request to correct in a message and transmitting the message to the equipment server 7.

The information on the position state of the object 4 may include, for example, information representing a remaining amount of charge of a battery which drives the object 4. The information on the position state of the object 4 may include, for example, information on an operating state of the object 4. Examples of the operating state of the object 4 include states, such as during movement or waiting. The information on the state of the object 4 may include, for example, information on operation content of the object 4. The information on the operation content includes, for example, a state, such as during operation or without operation.

In the stationary operation, a message is transmitted from the equipment server 7 to the object server 9 so as to request correction of the position state of the object 4. In the equipment server 7, the information on the position state of the object 4 is obtained by an observation apparatus, such as a camera provided in the building 2. A request to correct the position state is made, for example, if a difference between the position information of the object 4 that the equipment server 7 recognizes and a position state announced from the object 4 itself falls outside a predetermined range.

A position state correction request message includes, in a payload, information on a base point and the like as data in JSON format. Information on the base point may include, for example, information for correction of the orientation of the object 4. Pieces of data included in the payload include, for example, an API name designating a function on the object side for position state synchronization, an object ID for identification of the object 4 to be synchronized, and information designating a data representation of the base point. The API name is, for example, "PositionSynchronizationFromPF." The position state correction request message is configured to, for example, include a first layer of Mobility, a second layer (first information) of 001, a third layer (second information) of O2B, and a fourth layer of MovingObjectLocalization in a topic name and include an API (third information) of PositionSynchronizationFromPF in a payload. The data representation of the base point is, for example, designated in the same manner as in a data representation of the position of the object 4. The position state correction request message may include information on an identifier for identification of the base point.

On the basis of a correction request message received from the equipment server 7, the object control unit 14 of the object server 9 causes the object 4 identified in the message to correct the position state.

A message to be transmitted from the equipment server 7 to the object server 9 for position state synchronization may include information representing whether position state correction is necessary. If position state correction is unnecessary, the message may not include information on a base point. Such messages may be periodically transmitted at predetermined intervals.

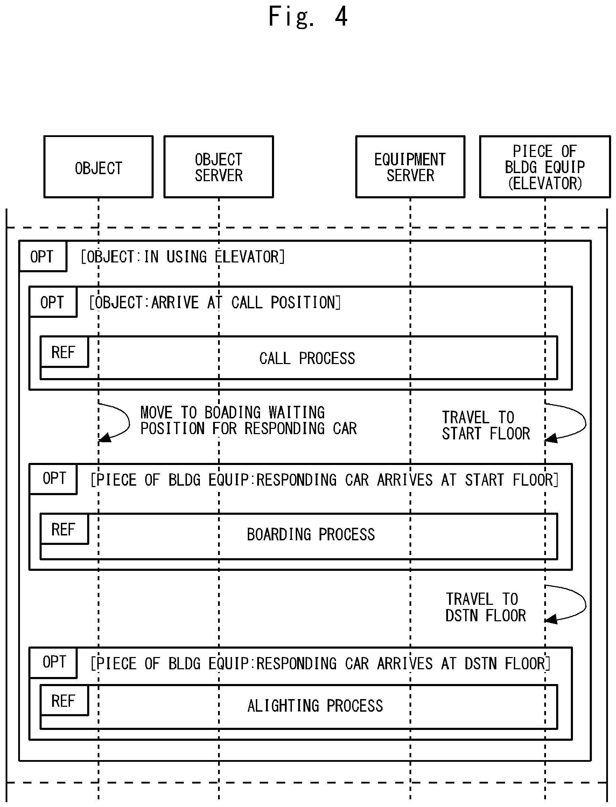

A sequence chart in a case where the object 4 moves using an elevator as the piece 3 of building equipment is shown in Fig. 4.

In this example, the elevator includes a plurality of cars and a group management apparatus. Each car is an apparatus which transports a user, the object 4, and the like by traveling in a vertical direction between a plurality of floors in the building 2 in accordance with a call. The group management apparatus is a portion which manages a call to be assigned to each car.

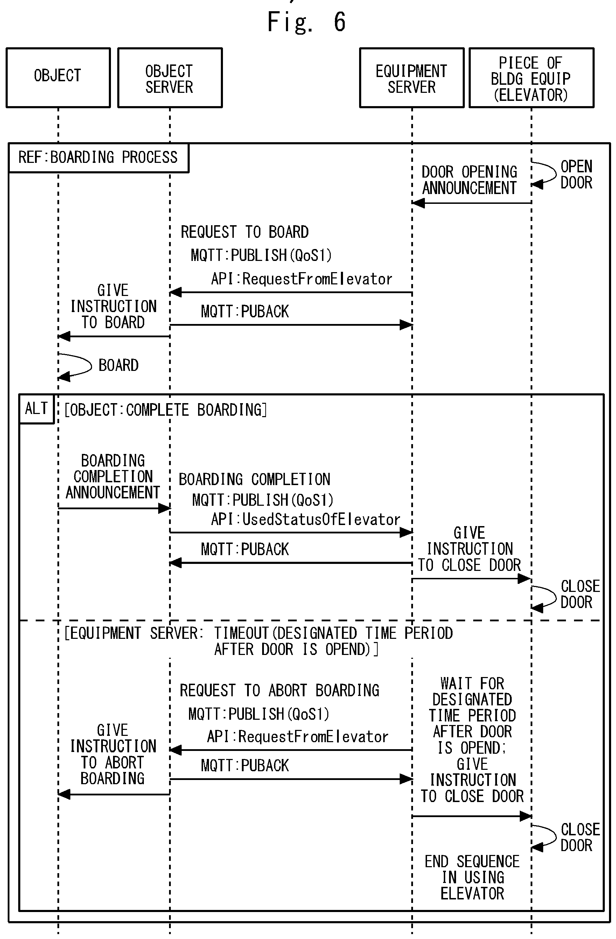

If the object 4 uses the elevator, when the object 4 arrives at a call position, an elevator call process shown in Fig. 6 is performed in the communication system 1. The call position is, for example, a position in an elevator hall. In the call process, a message is communicated between the object server 9 and the equipment server 7. In the call process, the elevator registers a hall call with a start floor set at a floor where the object 4 is present. The group management apparatus of the elevator assigns the registered hall call to any of the plurality of cars. In the call process, which one of the plurality of cars is a responding car which is assigned the hall call is announced to the object 4. Here, the object 4 that uses the elevator is an example of a first device which moves in a facility. The object server 9 that controls the object 4 that uses the elevator is an example of a first device server. The responding car that responds to the hall call of the object 4 is an example of a first car.

After the call process is performed, the object 4 moves to a boarding waiting position for the announced responding car. The boarding waiting position is set in advance so as to correspond to the responding car. The boarding waiting position is, for example, a position on this side of a hall doorway corresponding to a hoistway, along which the responding car travels. After the call process is performed, the responding car moves to the start floor.

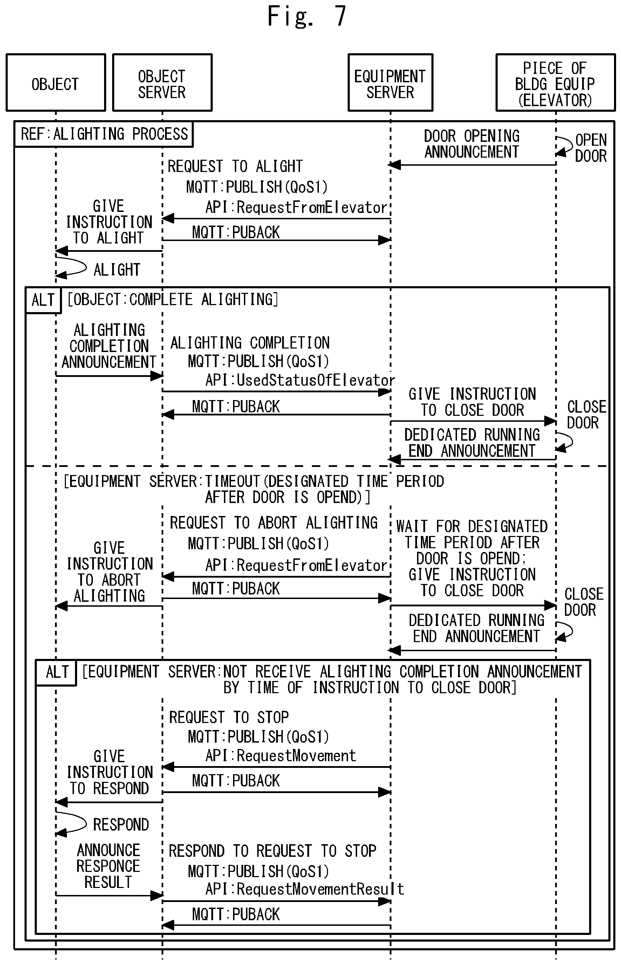

When the responding car arrives at the start floor, an elevator boarding process shown in Fig. 7 is performed in the communication system 1. In the boarding process, a message is communicated between the object server 9 and the equipment server 7. In the boarding process, the object 4 boards the responding car.

After the boarding process is performed, the responding car moves to a destination floor of the object 4.

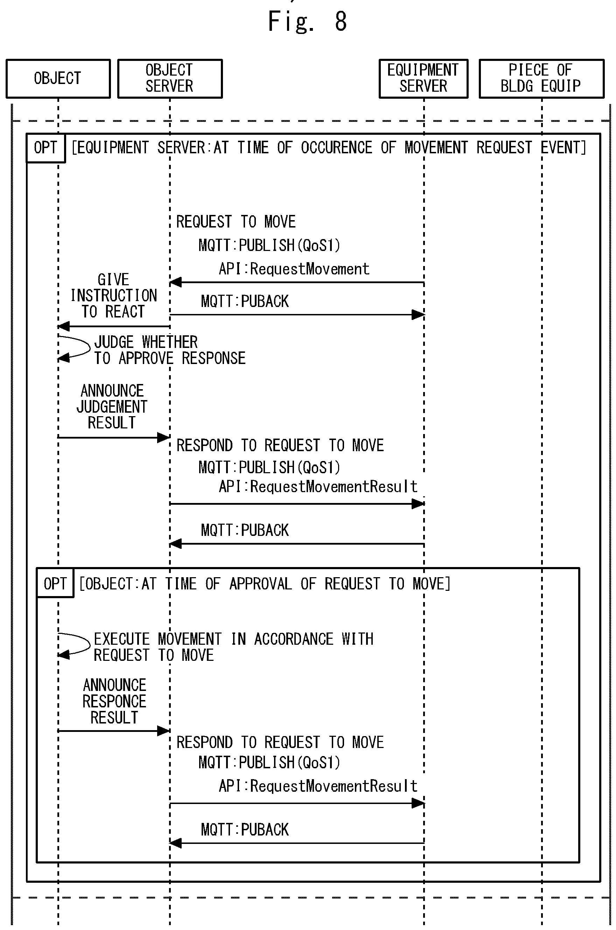

When the responding car arrives at the destination floor, an elevator alighting process shown in Fig. 8 is performed in the communication system 1. In the alighting process, a message is communicated between the object server 9 and the equipment server 7. In the alighting process, the object 4 alights from the responding car.

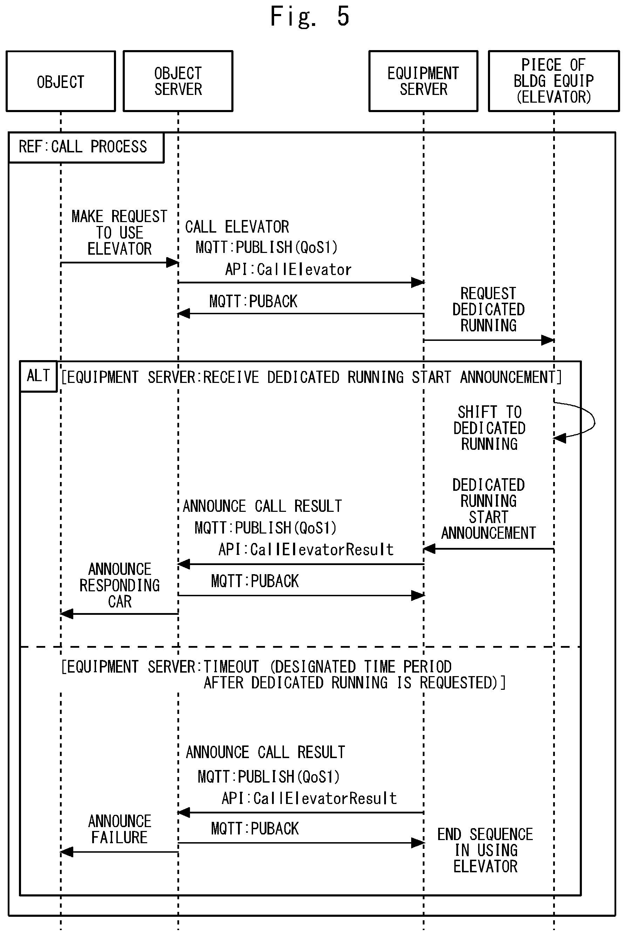

A sequence in the elevator call process is shown in Fig. 5.

The object 4 that is to use the elevator makes a request to use the elevator to the object server 9. Here, the object 4 need not specify a car to be used. If a plurality of elevators are provided in the building 2, the object 4 need not specify an elevator to be used.

The object server 9 that has received the request transmits a message representing an elevator call to the equipment server 7. The message representing the call includes, for example, an API name designating a call function, an object ID for identification of the object 4 that is to use the elevator, and information designating a destination floor of the object 4. The API name is, for example, "CallElevator." The message is configured to, for example, include a first layer of Mobility, a second layer (first information) of 001, a third layer (second information) of O2B, and a fourth layer of ElevatorInterface in a topic name and include an API (third information) of CallElevator in a payload.

The equipment control unit 11 of the equipment server 7 that has received the message selects, as a control target, the elevator from among the plurality of pieces 3 of building equipment on the basis of a function type of the message. If the elevator-only equipment control unit 11 that regards the elevator as a control target is provided, the equipment control unit 11 may obtain the message as a message on a topic subscribed to. If a plurality of elevators are provided in the building 2, the equipment control unit 11 may select an elevator as a control target from among the plurality of elevators on the basis of a position of the object 4. At this time, the equipment control unit 11 may select the elevator as the control target by, for example, comparing call positions corresponding to the respective elevators with the position of the object 4.

The equipment control unit 11 requests dedicated running for the object 4 from the elevator as the control target. At this time, the equipment control unit 11 also transmits information on the message transmitted from the object server 9.

The elevator that has received the request registers, as a hall call with a designated destination floor, a hall call with a start floor set at a floor where the object 4 is present. The floor where the object 4 is present is obtained, for example, on the basis of synchronous position information of the object 4. The destination floor is designated on the basis of information received from the equipment control unit 11. The group management apparatus assigns the registered hall call to any of the plurality of cars. A responding car which is assigned the hall call shifts to dedicated running. The elevator transmits a dedicated running start announcement to the equipment server 7. Here, the dedicated running start announcement includes information on a boarding waiting position for the responding car.

If the equipment server 7 receives the dedicated running start announcement from the elevator, the equipment server 7 transmits a message announcing a call result to the object server 9. The message announcing the call result includes, for example, an API name designating a call result announcement function, information representing whether the call is successful, and information on the boarding waiting position for the responding car. The message need not include information, such as a machine number for identification of the responding car itself. The API name is, for example, "CallElevatorResult." The message is configured to, for example, include a first layer of Mobility, a second layer (first information) of 001, a third layer (second information) of B2O, and a fourth layer of ElevatorInterface in a topic name and include an API (third information) of CallElevatorResult in a payload.

The object control unit 14 transmits information on the announced call result to the object 4. After that, the object 4 moves to the boarding waiting position on the basis of the received information on the call result.

On the other hand, if the equipment server 7 does not receive a dedicated running start announcement by the time a timeout period elapses since the request to perform dedicated running, the equipment server 7 transmits a message announcing a call result to the object server 9. The timeout period is a predetermined time period, such as 20 minutes. The message is transmitted as a message on the same topic designating the same API as in the case where the dedicated running start announcement is received. In this case, the message includes information representing a call failure. The message need not include information on the boarding waiting position.

The object control unit 14 transmits information on the announced call result to the object 4. The communication system 1 ends the sequence in the case where the object 4 moves using the elevator. After that, the object 4 shifts to an operation in a case of failure in elevator call, on the basis of the received information on the call result.

A sequence in the elevator boarding process is shown in Fig. 6.

When the responding car arrives at the start floor of the object 4, the responding car opens a car door. The elevator transmits a door opening announcement to the equipment server 7.

If the equipment server 7 receives the door opening announcement from the elevator, the equipment server 7 transmits a message representing a request from the elevator to the object server 9. The message representing the request from the elevator includes, for example, an API name designating a function on the object 4 side of responding to the request from the elevator, and information representing the type of the request. The type of the request is, for example, request to board. The message may include information on an on-board position inside the responding car. The API name is, for example, "RequestFromElevator." The message is configured to, for example, include a first layer of Mobility, a second layer (first information) of 001, a third layer (second information) of B2O, and a fourth layer of ElevatorInterface in a topic name and include an API (third information) of RequestFromElevator in a payload.

The object control unit 14 transmits, to the object 4, information on the request from the elevator which is received from the equipment server 7. The object 4 boards the responding car on the basis of the request to board from the elevator. When the object 4 arrives at the on-board position inside the responding car, the object 4 transmits a boarding completion announcement to the object server 9.

If the object server 9 receives the boarding completion announcement from the object 4, the object server 9 transmits a message representing a used status of the elevator to the equipment server 7. The message representing the used status of the elevator includes, for example, an API name designating a function on the equipment side appropriate to the status of the object 4, an object ID for identification of the object 4 that is using the elevator, and a status code for the used status. The status code for the used status is, for example, a numerical value, such as "1" representing boarding completion. The API name is, for example, "UsedStatusOfElevator." The message is configured to, for example, include a first layer of Mobility, a second layer (first information) of 001, a third layer (second information) of O2B, and a fourth layer of ElevatorInterface in a topic name and include an API (third information) of UsedStatusOfElevator in a payload.

When the equipment control unit 11 receives the boarding completion announcement from the object server 9, the equipment control unit 11 transmits an instruction to close the door of the responding car to the elevator. The elevator closes the door of the responding car on the basis of the received instruction.

On the other hand, if the equipment server 7 does not receive a boarding completion announcement by the time a timeout period elapses since reception of the door opening announcement, the equipment server 7 transmits a message representing a request from the elevator to the object server 9. The timeout period is a predetermined time period, such as 800 seconds. The message is configured to, for example, include a first layer of Mobility, a second layer (first information) of 001, a third layer (second information) of B2O, and a fourth layer of ElevatorInterface in a topic name. The type of the request in the message is, for example, a request to abort boarding.

The object control unit 14 transmits, to the object 4, information on the request from the elevator which is received from the equipment server 7. The object 4 aborts boarding the responding car on the basis of the request to abort boarding from the elevator. In the boarding abort process, the object 4 turns back to the elevator hall such that the elevator can return to normal running.

When the boarding abort process is complete, the object 4 may transmit a boarding abort completion announcement to the object server 9. The object server 9 may transmit a boarding abort completion message to the equipment server 7 with the same API as that for a boarding completion announcement.

The equipment control unit 11 waits until a door open holding time period elapses since the opening the door of the responding car. The door open holding time period is a predetermined time period, such as 300 seconds. The equipment control unit 11 transmits an instruction to close the door of the responding car to the elevator after the door open holding time period elapses. If the equipment control unit 11 receives a boarding abort completion message from the object server 9, the equipment control unit 11 may transmit an instruction to close the door of the responding car without waiting for a lapse of the door open holding time period. The elevator closes the door of the responding car on the basis of the received instruction. The communication system 1 ends the sequence in the case where the object 4 moves using the elevator.

A sequence in the elevator alighting process is shown in Fig. 7.

In the alighting process, the communication system 1 operates in the same manner as in the boarding process until the door of the responding car closes on the destination floor of the object 4. That is, when the responding car arrives at the destination floor, the responding car opens the car door. The elevator transmits a door opening announcement to the equipment server 7. The equipment server 7 transmits a message representing a request to alight to the object server 9. The object server 9 causes the object 4 to alight from the responding car on the basis of the received message. When the object 4's alighting is complete, the object server 9 transmits a message representing alighting completion to the equipment server 7. The equipment server 7 transmits an instruction to close the door of the responding car to the elevator. If a timeout occurs during the object 4's alighting on the destination floor, the equipment server 7 transmits a message representing a request to abort alighting to the object server 9. After a lapse of a door open holding time period, the equipment server 7 transmits an instruction to close the door of the responding car to the elevator.

After the elevator closes the door of the responding car, the elevator ends the dedicated running. After that, the elevator transmits a dedicated running end announcement to the equipment server 7.

If an alighting completion announcement message is not received from the object server 9 by the time the instruction to close the door of the responding car is transmitted, there is a possibility that confinement of the object 4 in the responding car is occurring. In this case, the equipment server 7 transmits, to the object server 9, a message representing a request to the object 4 from the equipment server 7. The message representing the request from the equipment server 7 includes, for example, an API name designating a function on the object side of responding to the request, and information representing the type of the request. The type of the request is, for example, request to stop. The API name is, for example, "RequestMovement."

The object control unit 14 transmits information on the request received from the equipment server 7 to the object 4. The object 4 stops inside the responding car on the basis of the request to stop from the equipment server 7. After that, the object 4 transmits a stop completion announcement to the object server 9.

If the object server 9 receives the stop completion announcement from the object 4, the object server 9 transmits, to the equipment server 7, a message representing a result of response to the request from the equipment server 7. The message representing the result of response to the request includes, for example, an API name representing response result announcement, information representing the type of the request from the equipment server 7, and a status code for the response result. The status code for the response result is, for example, a numerical value, such as "101" representing a success in response. The API name is, for example, "RequestMovementResult." The message is configured to, for example, include a first layer of Mobility, a second layer (first information) of 001, a third layer (second information) of O2B, and a fourth layer of ObjectInterface in a topic name and include an API (third information) of RequestMovementResult in a payload.

When the equipment control unit 11 receives a response result announcement from the object server 9, the equipment control unit 11 judges whether the responding car is able to travel. If the responding car is able to travel, the elevator causes the responding car to an emergency response floor with the confined object 4 on board. The emergency response floor is, for example, a predetermined floor on which a disaster-prevention center or the like is provided. On the emergency response floor, the elevator opens the door of the responding car. The equipment server 7 moves the object 4 to a waiting place by, for example, transmitting a message to the object server 9.

A sequence chart in a case where the equipment server 7 requests the object 4 to move is shown in Fig. 8.

When occurrence of a movement request event is detected, the equipment server 7 requests, from the object 4, movement appropriate to the type of the movement request event. The movement request event is an event which requires a request for the object 4 to move. The movement request event is, for example, an emergency event including a disaster, such as an earthquake to be detected by an earthquake detector provided in the building 2 or a fire disaster to be detected by a fire detector. The movement request event may be an event which is detected on the basis of a position state of the object 4 by the object management unit 12. The movement request event is, for example, an event during an anomaly, such as a failure of or trouble with the object 4. The movement request event may be an event which affects operation of the object 4, such as a reduction in the remaining amount of charge of the battery that drives the object 4. The movement request event may be an event related to security of the building 2, such as entry of the object 4 into a region, entry into which is not permitted.

When occurrence of a movement request event is detected, the equipment server 7 transmits, to the object server 9, a message representing a request to the object 4 from the equipment server 7. The message designates, for example, the API "RequestMovement." The type of the request in the message is, for example, a request to move. The message may include information announcing the type of a disaster occurred. The message may include information on a position, movement to which is requested. The position, movement to which is requested, is, for example, a position of the waiting place for the object 4 in an emergency or during an anomaly. The position, movement to which is requested, may be, for example, a position of a charging station. The position, movement to which is requested, may be, for example, a position of a region, entry into which is permitted to the object 4.

The object control unit 14 transmits information on the request received from the equipment server 7 to the object 4. The object 4 judges whether to approve the request to move from the equipment server 7. The object 4 transmits a result of judging whether to approve to the object server 9.

If the object server 9 receives the judgment result from the object 4, the object server 9 transmits, to the equipment server 7, a message representing reaction to the request from the equipment server 7. The message designates, for example, the API "RequestMovementResult." The message is configured to, for example, include a first layer of Mobility, a second layer (first information) of 001, a third layer (second information) of O2B, and a fourth layer of Objectlnterface in a topic name and include an API (third information) of RequestMovementResult in a payload. A status code for a response result in the message is, for example, a numerical value, such as "1" representing approval for the request or "2" representing rejection.

If the object 4 approves the request to move from the equipment server 7, the object 4 moves to a requested position on the basis of the request to move from the equipment server 7. After that, the object 4 transmits a movement completion announcement to the object server 9.

If the object server 9 receives the movement completion announcement from the object 4, the object server 9 transmits, to the equipment server 7, a message representing the result of response to the request from the equipment server 7. The message is, for example, a message on the same topic designating the same API as the message representing the response to the request. A status code for the response result in the message is, for example, a numerical value, such as "101" representing a success in response or "102" representing a failure in response.

As has been described above, the communication system 1 according to Embodiment 1 includes a plurality of equipment servers 7 and a plurality of object servers 9. In the communication system 1, a message is communicated between each of the plurality of equipment servers 7 and each of the plurality of object servers 9 in a common format. The message includes first information, second information, and third information. The first information is information for identification of each of a plurality of objects 4 as devices. Each object 4 works in a facility. Each object 4 uses at least any of a plurality of pieces of equipment in the facility. The second information is information representing a message transmission direction. The third information is information representing a process to be executed by a piece of equipment or a device as a control target to be controlled. The third information represents, for example, an API. Each of the plurality of equipment servers 7 includes the equipment control unit 11 and the first communication unit 10. When a message is received by the equipment server 7, the equipment control unit 11 controls at least any of the plurality of pieces of equipment as a control target on the basis of the message. The first communication unit 10 communicates a message with each of the plurality of object servers 9 in the common format. Each of the plurality of object servers 9 includes the object control unit 14 and the second communication unit 13. When a message is received by the object server 9, the object control unit 14 controls at least any of the plurality of objects 4 as a control target on the basis of the message. The second communication unit 13 communicates a message with each of the plurality of equipment servers 7 in the common format. Since a message is communicated between each of the plurality of equipment servers 7 and each of the plurality of object servers 9 in the common format, a message is used for control of at least any of the plurality of pieces of equipment and the plurality of objects 4.

In the communication system 1, the plurality of pieces of equipment and the plurality of objects 4 cooperate with each other by communication via the equipment server 7 and the object server 9. The equipment server 7 and the object server 9 communicate with each other by a message in the common format. As described above, the plurality of pieces of equipment and the plurality of objects 4 are loosely coupled with regard to communication for coordination. The object 4 that is to cooperate is identified by first information, and which object 4 a message is about is clear. Since it is unnecessary to individually identify a combination of a transmitter and a receiver of a message in second information, even if the number of pieces of equipment and the number of objects 4 to cooperate are both large, the amount of communication is unlikely to increase. Since a piece of equipment or the like which is to cooperate is identified by third information and by the type of a function in coordination, the object 4 need not have information on individual pieces of equipment provided in the facility. This allows a piece of equipment and the object 4 to operate easily in coordination with each other regardless of a combination of the kind of the piece of equipment and the kind of the object 4. Thus, even if a plurality of objects 4 different in, a manufacturer, a management agent, and the like move in the facility, the objects 4 can move freely without consideration of protocols for respective pieces of equipment.

The equipment control unit 11 selects, on the basis of third information, which one of the plurality of pieces of equipment a control target based on a message is. This allows the object 4 to use an equipment function by designating the function without having information on individual pieces of equipment to be used. Note that, for example, in a case where the dedicated equipment control unit 11 is provided for each of pieces of equipment as control targets, the equipment control unit 11 may select a message to be obtained on the basis of third information.

The equipment control unit 11 selects which one of the plurality of pieces of equipment a control target based on a message is, on the basis of position information of the object 4 stored in association with information on the object 4 identified by first information. This allows the equipment control unit 11 to select a piece of equipment which the object 4 is to use without need for designation of an individual piece of equipment by the object 4. Thus, the object 4 can use an equipment function by designating the function without having information on individual pieces of equipment to be used. Note that the equipment control unit 11 may select a piece of equipment as a control target on the basis of a combination of a position of an object 4 and third information.

If third information of a message represents a hall call, the equipment control unit 11 identifies a floor on which the object is located on the basis of position information of the object 4 stored in association with information on the object 4 identified by first information. The equipment control unit 11 registers the hall call for the identified floor in an elevator which is the piece 3 of building equipment. If the elevator has a plurality of cars, the first communication unit 10 includes, in a message, information for identification of a car which is caused to respond to the hall call of the object 4 among the plurality of cars and transmits the message to the object server 9 that controls the object 4. This allows the object 4 that uses the elevator as a piece of equipment can easily call an elevator car. The object 4 need not select an elevator to be used. The object 4 can use an elevator without having information on the number of elevators to be used, and the like. The object 4 need not select an elevator car to be used. The object 4 need not judge an available elevator car. This facilitates movement of the object 4 in the facility using an elevator.

When a door of a car of the elevator opens on the identified floor, the first communication unit 10 transmits a message including third information representing a request to board the car to the object server 9 that controls the object 4. After the equipment control unit 11 transmits the message including the third information representing the request to board the car of the elevator to the object server 9 and when the equipment control unit 11 receives a message including third information representing completion of boarding of the car of the elevator from the object server 9, the equipment control unit 11 causes the elevator to close the car door. This allows the object 4 that uses the elevator as a piece of equipment to easily board the car regardless of the model of the elevator, or the like. The equipment server 7 can cause the object 4 to easily board the car regardless of the model of the object 4, or the like.

When the car door of the elevator opens on the identified floor, the first communication unit 10 transmits a message including third information representing a request to alight from the car to the object server 9 that controls the object 4. After the equipment control unit 11 transmits the message including the third information representing the request to alight from the car of the elevator car to the object server 9 and when the equipment control unit 11 receives, from the object server 9, a message including third information representing completion of alighting from the car of the elevator, the equipment control unit 11 causes the elevator to close the car door. This allows the object 4 that uses the elevator as a piece of equipment can easily alight from the car regardless of the model of the elevator, or the like. The equipment server 7 can cause the object 4 to easily alight from the car regardless of the model of the object 4, or the like.

When occurrence of a movement request event which is an event requiring a request for the object 4 to move is detected, the first communication unit 10 transmits a message including third information representing a request to the object 4 for movement appropriate to the type of the movement request event to the object server 9 that controls the object 4. This allows the equipment server 7 to cause the object 4 to make a response appropriate to a situation of, e.g., a facility or a piece of equipment or the object 4 regardless of model or the like.

Note that third information of a message transmitted from the object server 9 may be data representing a request to start operation of a piece of equipment as a control target. In this case, the equipment control unit 11 causes operation of the piece of equipment as the control target based on the message to be started. The third information of the message transmitted from the object server 9 may be data representing a request to stop operation of the piece of equipment as the control target. In this case, the equipment control unit 11 causes operation of the piece of equipment as the control target based on the message to be stopped. This facilitates coordination between the object 4 and a piece of equipment in a facility.

A control target in a message as described above may be, for example, a passenger conveyor, an air-conditioning apparatus, a ventilating apparatus, or a lighting apparatus. If the control target is a passenger conveyor, the equipment control unit 11, for example, initiates or stops running of the passenger conveyor. If the control target is an air-conditioning apparatus, the equipment control unit 11, for example, initiates or stops running of the air-conditioning apparatus. If the control target is a ventilating apparatus, the equipment control unit 11, for example, initiates or stops air blowing or air exhausting of the ventilation apparatus. If the control target is a lighting apparatus, the equipment control unit 11, for example, turns on or off the lighting apparatus.

Third information of a message transmitted from the object server 9 may be data representing a request to change an operating state of a piece of equipment as a control target. In this case, the equipment control unit 11 changes the operating state of the piece of equipment as the control target based on the message. This facilitates coordination between the object 4 and a piece of equipment in a facility.

The change of the operating state may be switching of an operating mode. If the control target is a passenger conveyor, switching of the operating mode is, for example, switching between upward running and downward running or switching between highspeed running and low-speed running. The change of the operating state may be, for example, change of an operation parameter. If the control target is a passenger conveyor, the operation parameter is, for example, a running speed. If the control target is an air-conditioning apparatus, the operation parameter is, for example, a set temperature or an air volume. If the control target is a lighting apparatus, change of the operation parameter is, for example, dimming or toning.

The equipment control unit 11 may cause an access control apparatus which is the piece 3 of building equipment to authenticate the object 4 that is identified on the basis of first information. If the authentication of the object 4 is successful, unlocking of an electric lock which is managed by the access control apparatus, or the like is performed. This allows the object 4 to move smoothly even in a facility having a region, entry into or exit from which is managed. Note that a message transmitted from the object server 9 may include authentication information of the object 4.

A message transmitted from the object server 9 may include information representing that the object 4 has lost sight of a current position of itself. In this case, the equipment server 7 may transmit, for example, a position information correction request message or a movement request message to the object server 9 that controls the object 4.

If a piece of equipment as a control target rejects execution of a function based on a message transmitted from the object server 9, the equipment server 7 may send, in reply, a message including information representing a reason for rejection to the object server 9. For example, if an elevator rejects a call process, the equipment server 7 may send, in reply, the reason that the elevator is during seismic controlled running, the reason that the different object 4 is already on board a car, or the like as a reason for rejection to the object server 9. This allows the object 4 to determine the possibility of approval in a case where the object 4 requests execution of the function again. In this case, the object 4 may judge whether to make a request again in accordance with the reason sent in reply.

The equipment server 7 need not be an edge server. A plurality of equipment servers 7 may be provided for a single facility. The equipment server 7 may be, for example, one server computer. The equipment server 7 may be composed of a plurality of server computers or the like. The equipment server 7 may be, for example, a virtual server composed of a cloud service. Some or all of functions of the equipment server 7, such as the first communication unit 10, the equipment control unit 11, and the object management unit 12, may be provided in individual pieces of hardware. The equipment control unit 11 may be provided in a piece of equipment as a control target.

The object server 9 may be, for example, one server computer. The object server 9 may be composed of a plurality of server computers or the like. The object server 9 may be, for example, a virtual server composed of a cloud service. The object server 9 may regard each of a plurality of objects 4 manufactured by manufacturers different from each other as a control target. A manager of the object server 9 may be different from a manager of the object 4. Some or all of functions of the object server 9, such as the second communication unit 13 and the object control unit 14, may be provided in individual pieces of hardware. The object server 9 may be a dedicated server apparatus or a piece of dedicated server software for each object 4 as a control target. The object control unit 14 may be provided in the object 4 as a control target. The object server 9 may be provided for each facility in which the objects 4 move. The object server 9 may be equipped with an MQTT broker function in relation to the objects 4 as control target. In this case, some or all of the objects 4 as the control targets are each equipped with an MQTT client function. The equipment server 7 may be equipped with an MQTT client function which serves as an interface with the object server 9 as an MQTT broker.

Communication between the equipment server 7 and the object server 9 may be performed by a protocol other than MQTT which is suitable for multipoint-to-multipoint communication. Data to be communicated in a payload of a message may be in a format other than JSON, such as YAML format (YAML: YAML Ain't a Markup Language) or a binary format, as long as the format is a common format.

A facility need not be a single construction. A facility may be a complex facility having a plurality of constructions. A facility may be, for example, an outdoor facility.

Third information may be, for example, one including a function type which is the fourth layer shown in Fig. 2.

The equipment control unit 11 that requests use of an elevator, such as dedicated running for the object 4, may register, in the elevator, a hall call with a floor not corresponding to position information of the object 4. For example, in a case where current position information of the object 4 moving to the first floor is the second floor, the equipment control unit 11 may register a hall call for the first floor in the elevator.

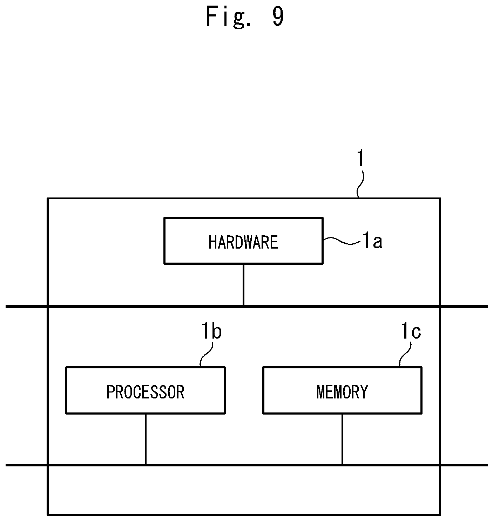

An example of a hardware configuration of a main portion of the communication system 1 will be described using Fig. 9.

Fig. 9 is a hardware configuration diagram of the main portion of the communication system according to Embodiment 1. The main portion of the communication system 1 is, for example, the equipment server 7 or the object server 9.

The functions of the communication system 1 can be implemented by a processing circuit. The processing circuit includes at least one processor 1b and at least one memory 1c. The processing circuit may include at least one piece 1a of dedicated hardware together with or in place of the processor 1b and the memory 1c.

If the processing circuit includes the processor 1b and the memory 1c, the functions of the communication system 1 are implemented by software, firmware, or a combination of software and firmware. At least one of software and firmware is described as a program. The program is stored in the memory 1c. The processor 1b implements the functions of the communication system 1 by reading out and executing the program stored in the memory 1c.

The processor 1b is also referred to as a CPU (Central Processing Unit), a processing apparatus, an arithmetic apparatus, a microprocessor, a microcomputer, or a DSP. The memory 1c is, for example, composed of a nonvolatile or volatile semiconductor memory, such as a RAM, a ROM, a flash memory, an EPROM, or an EEPROM.

If the processing circuit includes the piece 1a of dedicated hardware, the processing circuit is, for example, implemented by a single circuit, a composite circuit, a programmed processor, a parallel-programmed processor, an ASIC, an FPGA, or a combination thereof.

The functions of the communication system 1 can be implemented by respective processing circuits. Alternatively, the functions of the communication system 1 can be collectively implemented by a processing circuit. As for the functions of the communication system 1, some may be implemented by the piece 1a of dedicated hardware, and the others may be implemented by software or firmware. As described above, the processing circuit is the piece 1a of hardware, software, firmware, or a combination thereof and implements the functions of the communication system 1.

### Embodiment 2.

In Embodiment 2, points different from the example disclosed in Embodiment 1, and the like will be described in detail. Any feature in the example disclosed in Embodiment 1 may be adopted as a feature not described in Embodiment 2.

In Embodiment 2, an example of coordination between an elevator as a piece 3 of building equipment and an object 4 which moves in a building 2 will be described.

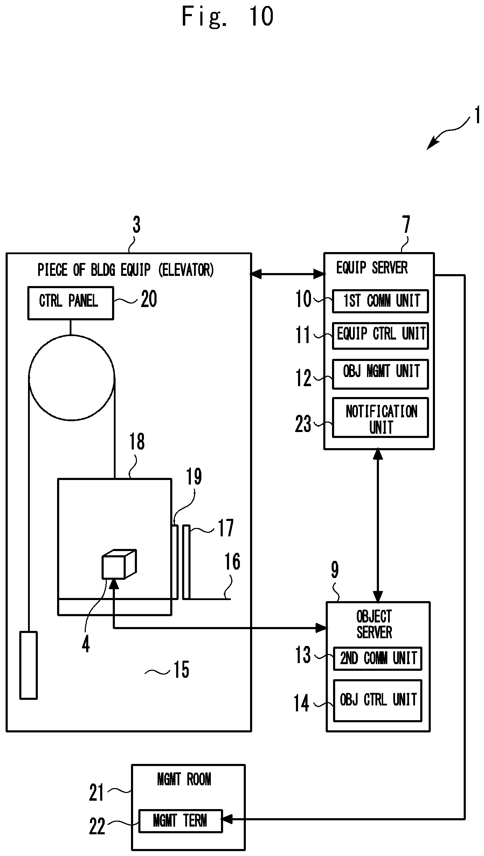

Fig. 10 is a configuration diagram of a communication system according to Embodiment 2.

In the building 2, a hoistway 15 is provided. The hoistway 15 is a space which extends over a plurality of floors of the building 2. A hall 16 adjacent to the hoistway 15 is provided on each floor of the building 2. At the hall 16, a hall door 17 is provided. The hall door 17 is a door which separates the hoistway 15 and the hall 16 from each other.

The elevator includes a car 18. The car 18 transports a user, the moving object 4, and the like between the plurality of floors of the building 2 by traveling along the hoistway 15 in a vertical direction in accordance with a call. The car 18 includes a car door 19. When the car 18 is during a stop on any floor, the car door 19 opens and closes the hall door 17 in conjunction with itself such that a user, the moving object 4, and the like can board and alight from the car 18.

The elevator includes a control panel 20. The control panel 20 is an apparatus which controls operations of the elevator. The operations of the elevator to be controlled by the control panel 20 include, for example, traveling of the car 18 and opening and closing of the car door 19. The elevator as the piece 3 of building equipment communicates with an equipment server 7 through, for example, the control panel 20.

In this example, a management room 21 of the building 2 is provided. The management room 21 is, for example, one room of the building 2. The management room 21 may be provided in a building outside the building 2. The management room 21 is a place where the work of managing the building 2 and the like are to be performed. A management terminal 22 is installed in the management room 21. The management terminal 22 is an apparatus which performs the work of managing the building 2 and the like. The management terminal 22 is a general-purpose information terminal, such as a personal computer. The management terminal 22 may be connected to an alarm, such as a buzzer or a lamp. The management terminal 22 may be a portable information terminal, such as a smartphone. The management terminal 22 is used by a manager of the building 2.

The equipment server 7 includes a notification unit 23. The notification unit 23 is a portion which gives notification to the manager of the building 2. The notification unit 23 gives notification to the manager by, for example, transmitting electronic mail viewable by the management terminal 22. For example, if the management terminal 22 is connected to an alarm, the notification unit 23 may give notification to the manager by an alarm tone, an alarm display, or the like of the alarm.

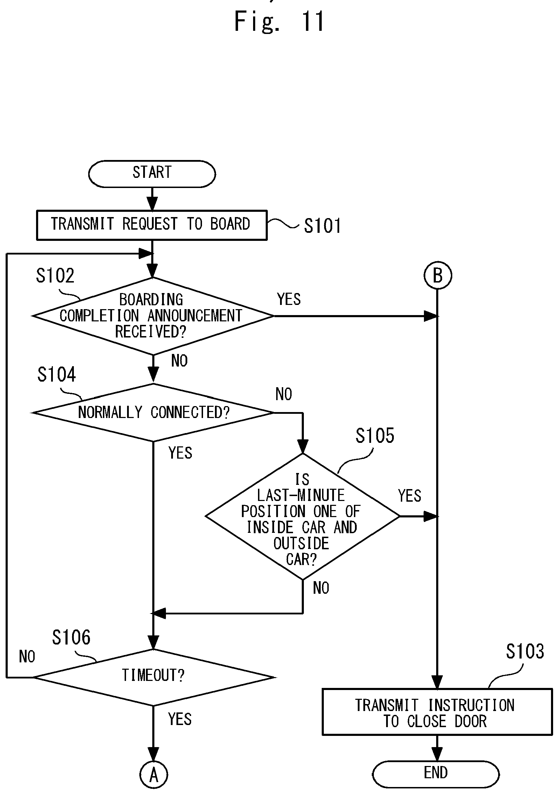

An example of operation of a communication system 1 will be described using Figs. 11 to 14.

Figs. 11 to 14 are flowcharts showing an example of the operation of the communication system according to Embodiment 2.

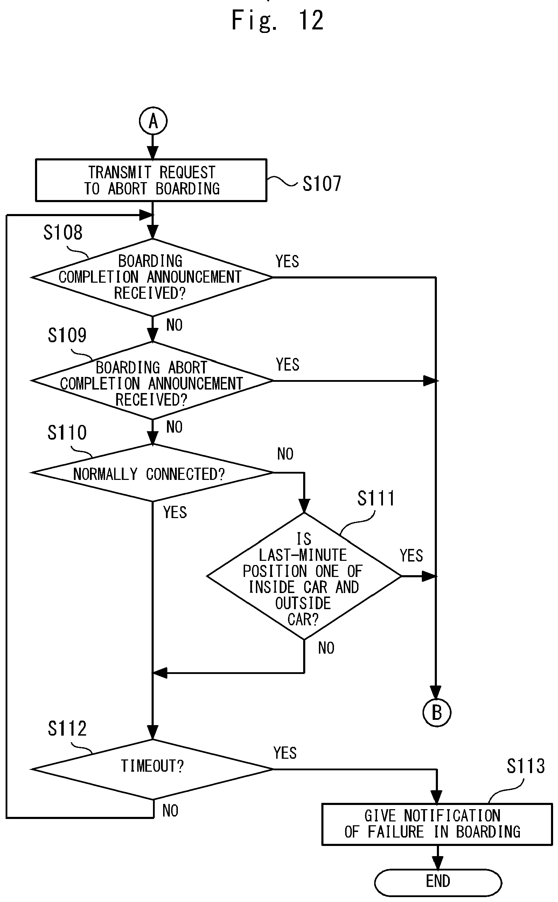

An example of an operation flow of the equipment server 7 in an elevator boarding process is shown in Figs. 11 and 12.

The car 18 that is assigned a hall call of the object 4 is performing dedicated running for the object 4. When the car 18 opens the car door 19 on a start floor of the object 4, the equipment server 7 receives, for example, a door opening announcement from the control panel 20 of the elevator. In this case, the equipment server 7 starts an operation beginning with step S101 in Fig. 11.

In step S101, the equipment server 7 transmits a message representing a request to board to an object server 9. The request to board is, for example, expressed as information on an API (third information) in a payload of the message. Note that the equipment server 7 may transmit the message representing the request to board to the object 4 through, for example, wireless communication. After that, the operation of the equipment server 7 advances to step S102.

The object server 9 transmits information on the request to board received from the equipment server 7 to the object 4. The object 4 boards the car 18 on the basis of the received request to board. When the object 4 arrives at an on-board position inside the car 18, the object 4 transmits a boarding completion announcement to the object server 9. When the object server 9 receives the boarding completion announcement from the object 4, the object server 9 transmits a message representing the boarding completion announcement to the equipment server 7. The boarding completion announcement is, for example, expressed as information on an API (third information) in a payload of the message. Note that the object 4 may transmit the boarding completion announcement to the equipment server 7.

In step S102, the equipment server 7 judges whether the equipment server 7 has received a boarding completion announcement from the object server 9 or the object 4. If a result of the judgment is yes, the operation of the equipment server 7 advances to step S103. On the other hand, if the result of the judgment is no, the operation of the equipment server 7 advances to step S104.

In step S103, the equipment server 7 transmits an instruction to close the car door 19 to the elevator. After that, the operation of the equipment server 7 in the boarding process ends.

The elevator closes the car door 19 on the basis of the instruction received from the equipment server 7.

In step S104, the equipment server 7 judges whether the equipment server 7 is normally connected to the object server 9. The equipment server 7 may judge whether the equipment server 7 is normally connected to the object 4 if the equipment server 7 communicates with the object 4. If a result of the judgment in step S104 is yes, the operation of the equipment server 7 advances to step S106. On the other hand, if there is no normal connection to the object server 9 or the object 4, a boarding completion announcement may not be received even when the object 4's boarding of the car 18 is complete. For this reason, if the result of the judgment in step S104 is no, the operation of the equipment server 7 advances to step S105.

In step S105, the equipment server 7 judges whether position information of the object 4 immediately before loss of normal connection to the object 4 is one of inside the car 18 and outside the car 18. If a result of the judgment in step S105 is yes, the operation of the equipment server 7 advances to step S103. On the other hand, if the position information of the object 4 immediately before the loss of normal connection to the object 4 is neither inside the car 18 nor outside the car 18, the object 4 may be located between inside the car 18 and outside the car 18. In this case, when the car door 19 closes in step S103, the object 4 may get caught in the car door 19. Thus, if the result of the judgment in step S105 is no, the operation of the equipment server 7 advances to step S106.

In step S106, the equipment server 7 judges whether a timeout has occurred, i.e., whether a predetermined time period has elapsed since the reception of the door opening announcement. If a result of the judgment is no, the operation of the equipment server 7 advances to step S102. On the other hand, if the result of the judgment is yes, the operation of the equipment server 7 advances to step S107 in Fig. 12.

In step S107, the equipment server 7 judges that the object 4 is unsuccessful in boarding the car 18. In this case, the equipment server 7 transmits a message representing a request to abort boarding to the object server 9. The request to abort boarding is, for example, expressed as information on an API (third information) in a payload of the message. Note that the equipment server 7 may transmit the message representing the request to abort boarding to the object 4. If the equipment server 7 judges that the object 4 is unsuccessful in boarding the car 18, the equipment server 7 also transmits an instruction to cancel dedicated running for the object 4 to the elevator. After that, the operation of the equipment server 7 advances to step S108.

The object server 9 transmits information on the request to abort boarding received from the equipment server 7 to the object 4. The object 4 aborts boarding the car 18 on the basis of the received request to abort boarding. In a boarding abort process, the object 4 turns back to the hall 16 such that the elevator returns to normal running. When the boarding abort process is complete, the object 4 transmits a boarding abort completion announcement to the object server 9. When the object server 9 receives the boarding abort completion announcement from the object 4, the object server 9 transmits a message representing the boarding abort completion announcement to the equipment server 7. The boarding abort completion announcement is, for example, expressed as information on an API (third information) in a payload of the message. Note that the object 4 may transmit the boarding abort completion announcement to the equipment server 7.

Note that the equipment server 7 may transmit, to the object server 9, a message representing a request to move to a predetermined position outside the car 18 if the equipment server 7 judges that the object 4 is unsuccessful in boarding the car 18. The position outside the car 18 is, for example, a position in the hall 16. The request to move is, for example, expressed as information on an API (third information) in a payload of the message. In the boarding abort process, the object 4 may move to outside the car 18 in accordance with the request to move. When movement based on the request to move is complete, the object 4 transmits a movement completion announcement to the object server 9. When the object server 9 receives the movement completion announcement from the object 4, the object server 9 transmits a message representing the movement completion announcement to the equipment server 7. The movement completion announcement is, for example, expressed as information on an API (third information) in a payload of the message. Note that the object 4 may transmit the movement completion announcement to the equipment server 7. The movement completion announcement may be communicated together with the boarding abort completion announcement.

In step S108, the equipment server 7 judges whether the equipment server 7 has received a boarding completion announcement from the object server 9 or the object 4. If a result of the judgment in step S108 is no, the operation of the equipment server 7 advances to step S109. Even in a case with a timeout in step S106 in Fig. 11, the object 4 may complete boarding the car 18 during a process related to communication for the request to abort boarding and the like. For this reason, if the result of the judgment in step S108 is yes, the operation of the equipment server 7 advances to step S103 in Fig. 11.

In step S109, the equipment server 7 judges whether the equipment server 7 has received a boarding abort completion announcement from the object server 9 or the object 4. If a result of the judgment is yes, the operation of the equipment server 7 advances to step S103 in Fig. 11. On the other hand, the result of the judgment is no, the operation of the equipment server 7 advances to step S110.

In step S110, the equipment server 7 judges whether the equipment server 7 is normally connected to the object server 9. The equipment server 7 may judge whether the equipment server 7 is normally connected to the object 4 if the equipment server 7 communicates with the object 4. If a result of the judgment in step S110 is yes, the operation of the equipment server 7 advances to step S112. On the other hand, if there is no normal connection to the object server 9 or the object 4, a boarding abort completion announcement may not be received even when the object 4's process of aborting boarding the car 18 is complete. For this reason, if the result of the judgment in step S110 is no, the operation of the equipment server 7 advances to step S111.

In step S111, the equipment server 7 judges whether the position information of the object 4 immediately before loss of normal connection to the object 4 is one of inside the car 18 and outside the car 18. If a result of the judgment in step S111 is yes, the operation of the equipment server 7 advances to step S103 in Fig. 11. On the other hand, if the position information of the object 4 immediately before the loss of normal connection to the object 4 is neither inside the car 18 nor outside the car 18, the object 4 may be located between inside the car 18 and outside the car 18. In this case, when the car door 19 closes in step S103, the object 4 may get caught in the car door 19. Thus, if the result of the judgment in step S111 is no, the operation of the equipment server 7 advances to step S112.

In step S112, the equipment server 7 judges whether a timeout has occurred, i.e., whether a predetermined time period has elapsed since the transmission of the request to abort boarding. If a result of the judgment is no, the operation of the equipment server 7 advances to step S108. On the other hand, if the result of the judgment is yes, the operation of the equipment server 7 advances to step S113.

In step S113, the notification unit 23 of the equipment server 7 notifies the manager of a failure of the object 4 to board the car 18. After that, the operation of the equipment server 7 in the boarding process ends.

Note that, if the car door 19 can be closed, for example, after the notification unit 23 of the equipment server 7 gives notification, the control panel 20 may close the car door 19.

If a boarding completion announcement is received in step S108, the equipment server 7 may transmit an instruction for dedicated running for the object 4 to the elevator again. In step S107, the equipment server 7 may transmit a boarding abort request message without transmitting an instruction to cancel dedicated running for the object 4 to the elevator. In this case, the equipment server 7 transmits an instruction to cancel the dedicated running for the object 4 to the elevator in, for example, step S113. If a boarding abort completion announcement is received in, for example, step S109, the equipment server 7 may transmit an instruction to cancel the dedicated running for the object 4 to the elevator. If a movement completion announcement of movement based on a request to move accompanying the request to abort boarding is received, the equipment server 7 may transmit an instruction to cancel the dedicated running for the object 4 to the elevator.

If the equipment server 7 judges in step S104, step S110, or the like that the equipment server 7 is not normally connected to the object server 9, the equipment server 7 may judge that the object 4 is unsuccessful in boarding the car 18.

In, e.g., a case where the elevator can return to normal running, the notification unit 23 may omit notification to the manager.

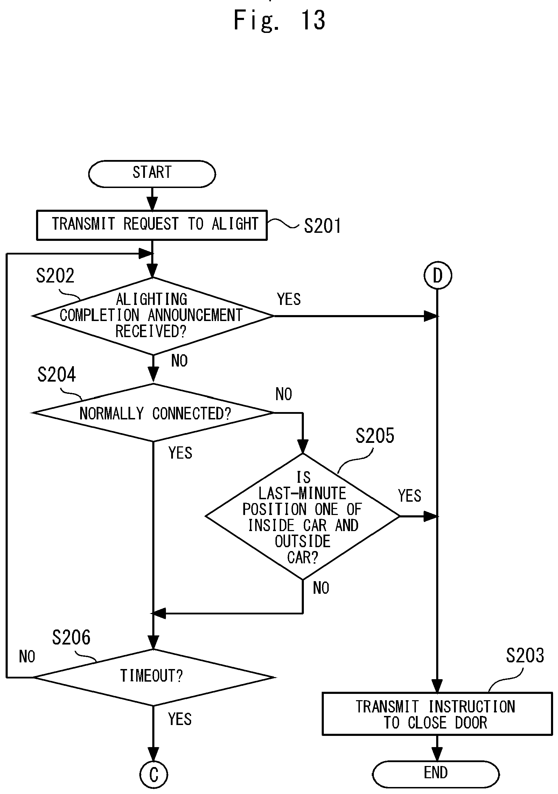

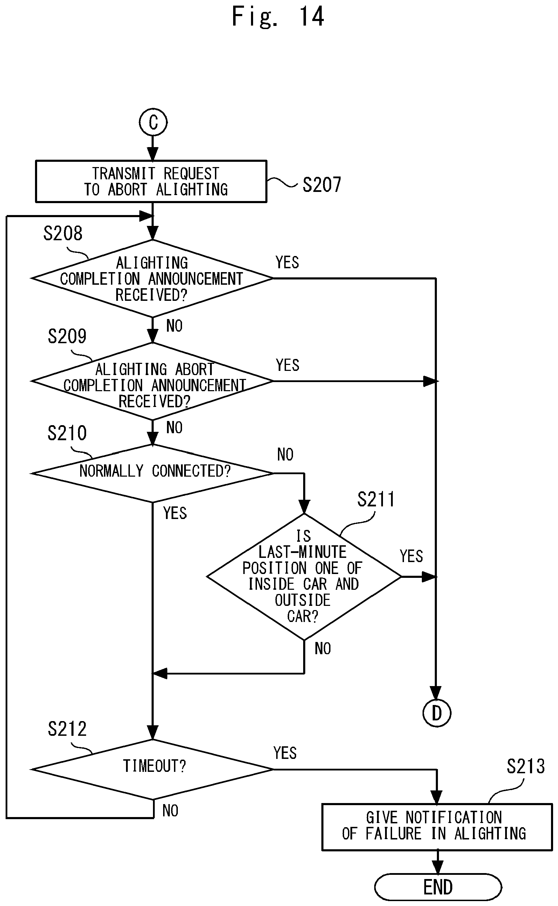

An example of an operation flow of the equipment server 7 in an elevator alighting process is shown in Figs. 13 and 14.

When the car 18 with the object 4 on board opens the car door 19 on a destination floor of the object 4, the equipment server 7 receives, for example, a door opening announcement from the control panel 20 of the elevator. In this case, the equipment server 7 starts an operation beginning with step S201 in Fig. 13.

In step S201, the equipment server 7 transmits a message representing a request to alight to the object server 9. The request to alight is, for example, expressed as information on an API (third information) in a payload of the message. Note that the equipment server 7 may transmit the message representing the request to alight to the object 4. After that, the operation of the equipment server 7 advances to step S202.

The object server 9 transmits information on the request to alight received from the equipment server 7 to the object 4. The object 4 alights from the car 18 on the basis of the received request to alight. When the object 4's alighting is complete, the object 4 transmits an alighting completion announcement to the object server 9. When the object server 9 receives the alighting completion announcement from the object 4, the object server 9 transmits a message representing the alighting completion announcement to the equipment server 7. The alighting completion announcement is, for example, expressed as information on an API (third information) in a payload of the message. Note that the object 4 may transmit the alighting completion announcement to the equipment server 7.

In step S202, the equipment server 7 judges whether the equipment server 7 has received an alighting completion announcement from the object server 9 or the object 4. If a result of the judgment is yes, the operation of the equipment server 7 advances to step S203. On the other hand, if the result of the judgment is no, the operation of the equipment server 7 advances to step S204.

In step S203, the equipment server 7 transmits an instruction to close the car door 19 to the elevator. After that, the operation of the equipment server 7 in the alighting process ends.

The elevator closes the car door 19 on the basis of the instruction received from the equipment server 7.

In step S204, the equipment server 7 judges whether the equipment server 7 is normally connected to the object server 9. The equipment server 7 may judge whether the equipment server 7 is normally connected to the object 4 if the equipment server 7 communicates with the object 4. If a result of the judgment in step S204 is yes, the operation of the equipment server 7 advances to step S206. On the other hand, if there is no normal connection to the object server 9 or the object 4, an alighting completion announcement may not be received even when the object 4's alighting from the car 18 is complete. For this reason, if the result of the judgment in step S204 is no, the operation of the equipment server 7 advances to step S205.

In step S205, the equipment server 7 judges whether position information of the object 4 immediately before loss of normal connection to the object 4 is one of inside the car 18 and outside the car 18. If a result of the judgment in step S205 is yes, the operation of the equipment server 7 advances to step S203. On the other hand, if the position information of the object 4 immediately before the loss of normal connection to the object 4 is neither inside the car 18 nor outside the car 18, the object 4 may be located between inside the car 18 and outside the car 18. In this case, when the car door 19 closes in step S203, the object 4 may get caught in the car door 19. Thus, if the result of the judgment in step S205 is no, the operation of the equipment server 7 advances to step S206.

In step S206, the equipment server 7 judges whether a timeout has occurred, i.e., whether a predetermined time period has elapsed since the reception of the door opening announcement. If a result of the judgment is no, the operation of the equipment server 7 advances to step S202. On the other hand, if the result of the judgment is yes, the operation of the equipment server 7 advances to step S207 in Fig. 14.

In step S207, the equipment server 7 judges that the object 4 is unsuccessful in alighting from the car 18. In this case, the equipment server 7 transmits a message representing a request to abort alighting to the object server 9. The request to abort alighting is, for example, expressed as information on an API (third information) in a payload of the message. Note that the equipment server 7 may transmit the message representing the request to abort alighting to the object 4. After that, the operation of the equipment server 7 advances to step S208.

The object server 9 transmits information on the request to abort alighting received from the equipment server 7 to the object 4. The object 4 aborts alighting from the car 18 on the basis of the received request to abort alighting. When the alighting abort process is complete, the object 4 transmits an alighting abort completion announcement to the object server 9. When the object server 9 receives the alighting abort completion announcement from the object 4, the object server 9 transmits a message representing the alighting abort completion announcement to the equipment server 7. The alighting abort completion announcement is, for example, expressed as information on an API (third information) in a payload of the message. Note that the object 4 may transmit the alighting abort completion announcement to the equipment server 7.

In step S208, the equipment server 7 judges whether the equipment server 7 has received an alighting completion announcement from the object server 9 or the object 4. If a result of the judgment in step S208 is no, the operation of the equipment server 7 advances to step S209. Even in a case with a timeout in step S206, the object 4 may complete alighting from the car 18 during a process related to communication for the request to abort alighting and the like. For this reason, if the result of the judgment in step S208 is yes, the operation of the equipment server 7 advances to step S203 in Fig. 13.

In step S209, the equipment server 7 judges whether the equipment server 7 has received an alighting abort completion announcement from the object server 9 or the object 4. If a result of the judgment is yes, the operation of the equipment server 7 advances to step S203 in Fig. 13. On the other hand, if the result of the judgment is no, the operation of the equipment server 7 advances to step S210.

In step S210, the equipment server 7 judges whether the equipment server 7 is normally connected to the object server 9. The equipment server 7 may judge whether the equipment server 7 is normally connected to the object 4 if the equipment server 7 communicates with the object 4. If a result of the judgment in step S210 is yes, the operation of the equipment server 7 advances to step S212. On the other hand, if there is no normal connection to the object server 9 or the object 4, an alighting abort completion announcement may not be received even when the object 4's process of aborting alighting from the car 18 is complete. For this reason, if the result of the judgment in step S210 is no, the operation of the equipment server 7 advances to step S211.

In step S211, the equipment server 7 judges whether the position information of the object 4 immediately before loss of normal connection to the object 4 is one of inside the car 18 and the outside the car 18. If a result of the judgment in step S211 is yes, the operation of the equipment server 7 advances to step S203 in Fig. 13. On the other hand, if the position information of the object 4 immediately before the loss of normal connection to the object 4 is neither inside the car 18 nor the outside the car 18, the object 4 may be located between inside the car 18 and outside the car 18. In this case, when the car door 19 closes in step S203, the object 4 may get caught in the car door 19. Thus, if the result of the judgment in step S211 is no, the operation of the equipment server 7 advances to step S212.

In step S212, the equipment server 7 judges whether a timeout has occurred, i.e., whether a predetermined time period has elapsed since the transmission of the request to abort alighting. If a result of the judgment is no, the operation of the equipment server 7 advances to step S208. On the other hand, if the result of the judgment is yes, the operation of the equipment server 7 advances to step S213.

In step S213, the notification unit 23 of the equipment server 7 notifies the manager of a failure of the object 4 to alight from the car 18. After that, the operation of the equipment server 7 in the alighting process ends.

Note that, if the car door 19 can be closed, for example, after the notification unit 23 of the equipment server 7 gives notification, the control panel 20 may close the car door 19.

If the equipment server 7 judges in step S204, step S210, or the like that the equipment server 7 is not normally connected to the object server 9, the equipment server 7 may judge that the object 4 is unsuccessful in alighting from the car 18.

As has been described above, in the communication system 1 according to Embodiment 2, the car 18 responds to a hall call of the object 4 that is controlled by the object server 9. The equipment control unit 11 of the equipment server 7 judges whether the equipment control unit 11 receives, from the object server 9, a message including third information representing completion of boarding of the car 18 by the time a predetermined time period elapses since transmission of a message including third information representing a request to board to the object server 9. If the equipment control unit 11 does not receive the message, the equipment control unit 11 judges that the object 4 is unsuccessful in boarding the car 18. In this case, the equipment control unit 11 transmits a message including third information representing a request to abort boarding the car 18 to the object server 9.

The equipment control unit 11 also judges whether the equipment control unit 11 receives, from the object server 9, a message including third information representing completion of alighting from the car 18 by the time a predetermined time period elapses since transmission of a message including third information representing a request to alight to the object server 9. If the equipment control unit 11 does not receive the message, the equipment control unit 11 judges that the object 4 is unsuccessful in alighting from the car 18. In this case, the equipment control unit 11 transmits a message including third information representing a request to abort alighting from the car 18 to the object server 9.

With the above-described configuration, since the object 4's boarding is aborted if the object 4 is unable to board the car 18, the elevator can return to normal running early. Since the object 4's alighting is aborted if the object 4 is unable to alight from the car 18, the elevator can return to normal running early. This makes service efficiency of the elevator unlikely to decrease. Since an anomaly on the object 4 side is determined in a state where communication between the equipment server 7 and the object server 9 is established, an anomaly of a robot is more accurately determined. Note that, for example, if the object 4 itself judges on the hall 16 on a start floor that the car door 19 has opened, the object 4 may start boarding the car 18 without being based on a request to board. Even in such a case where a message including a request to board is not transmitted, the equipment control unit 11 may transmit a message including a request to abort boarding to the object server 9 if the equipment control unit 11 judges that boarding is unsuccessful. Similarly, even in a case where a message including a request to alight is not transmitted, the equipment control unit 11 may transmit a message including a request to abort alighting to the object server 9 if the equipment control unit 11 judges that alighting is unsuccessful.

The equipment control unit 11 causes the car 18 to perform dedicated running for the object 4 when the equipment control unit 11 causes the car 18 to respond to a hall call. If the equipment control unit 11 judges that the object 4 is unsuccessful in boarding the car 18, the equipment control unit 11 causes the car 18 to cancel the dedicated running.

With the above-described configuration, since dedicated running is canceled when the object 4 is unsuccessful in boarding the car 18, the elevator can return to normal running early. This makes the service efficiency of the elevator unlikely to decrease.

If the equipment control unit 11 judges that the object 4 is unsuccessful in boarding the car 18, the equipment control unit 11 transmits, to the object server 9, a message including third information representing a request for the object 4 to move to a predetermined position outside the car 18.

With the above-described configuration, since the object 4 retracts to the position outside the car 18 when the object 4 is unsuccessful in boarding the car 18, the elevator can return to normal running early. This makes the service efficiency of the elevator unlikely to decrease.

The equipment control unit 11 causes the car 18 to perform dedicated running for the object 4 when the equipment control unit 11 causes the car 18 to respond to a hall call. If the equipment control unit 11 judges that the object 4 is unsuccessful in boarding the car 18, the equipment control unit 11 transmits, to the object server 9, a message including third information representing a request for the object 4 to move to the predetermined position outside the car 18. After that, when the equipment control unit 11 receives a message including third information representing completion of movement based on the request to move from the object server 9, the equipment control unit 11 causes the car 18 to cancel the dedicated running.

With the above-described configuration, since dedicated running is canceled after the object 4 is confirmed to have retracted to the position outside the car 18, resetting of dedicated running or the like due to, e.g., crossing of messages is less likely to be performed. This makes the service efficiency of the elevator unlikely to decrease.

The equipment server 7 includes the notification unit 23. The notification unit 23 gives notification of a failure in alighting if the equipment control unit 11 judges that the object 4 is unsuccessful in alighting from the car 18.

With the above-described configuration, if the object 4 is unsuccessful in alighting from the car 18, notification is given to the manager. Since the manager can swiftly know an anomaly or the like occurring on the object 4 side, the elevator can return to normal running early. This makes the service efficiency of the elevator unlikely to decrease.

### Embodiment 3.

In Embodiment 3, points different from the example disclosed in Embodiment 1 or Embodiment 2, and the like will be described in detail. Any feature in the example disclosed in Embodiment 1 or Embodiment 2 may be adopted as a feature not described in Embodiment 3.

In Embodiment 3, an example of coordination between an elevator as a piece 3 of building equipment and an object 4 which moves in a building 2 will be described.

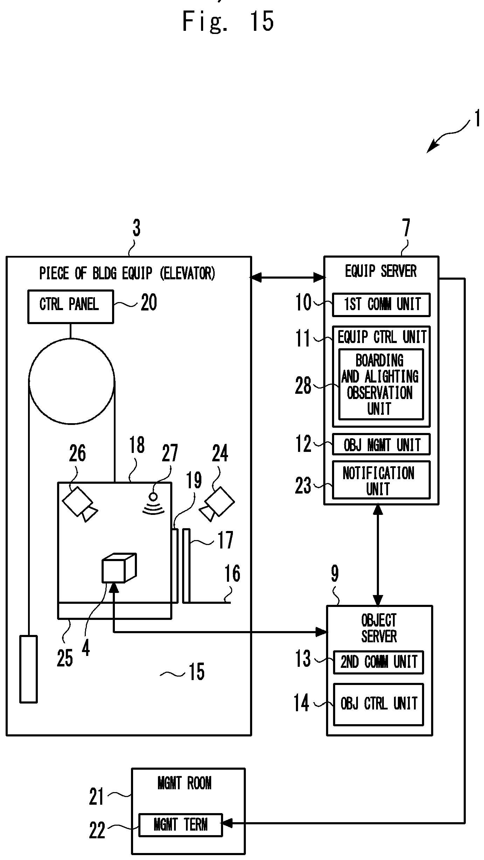

Fig. 15 is a configuration diagram of a communication system according to Embodiment 3.

In the elevator, one or more hall cameras 24 are provided. Each hall camera 24 is provided at any hall 16. The hall camera 24 is an apparatus which shoots an image. An image to be shot by the hall camera 24 is a still image, a moving image, or the like. The hall camera 24 is an example of a camera which is provided for the elevator.

A car 18 of the elevator includes a scale 25, a car camera 26, and a passage detector 27. The scale 25 is an apparatus which measures a load on the car 18. The scale 25 is provided, for example, at a lower portion or an upper portion of the car 18. The car camera 26 is provided inside the car 18. The car camera 26 is an apparatus which shoots an image. An image to be shot by the car camera 26 is a still image, a moving image, or the like. The car camera 26 is an example of a camera which is provided for the elevator. The passage detector 27 is provided at a doorway to the car 18. The passage detector 27 is arranged, for example, close to a car door 19. The passage detector 27 is an apparatus which detects a body, such as a user or the object 4, passing through the doorway to the car 18. The passage detector 27 has, for example, a photoelectric sensor. The passage detector 27 may have one or more projector and photoreceiver sets. The passage detector 27 may be provided at the car door 19.

The equipment control unit 11 of the equipment server 7 includes a boarding and alighting observation unit 28. The boarding and alighting observation unit 28 is a portion which observes a status of a device, such as the object 4, of boarding and alighting from the car 18. The boarding and alighting observation unit 28 is an example of a boarding observation unit which observes a status of boarding the car 18. The boarding and alighting observation unit 28 is also an example of an alighting observation unit which observes a status of alighting from the car 18. Note that the equipment server 7 may include a boarding observation unit and an alighting observation unit as separate units.

The equipment server 7 judges, on the basis of a result of observation by the boarding and alighting observation unit 28, whether the object 4's boarding of and alighting from the car 18 is successful. The equipment server 7 may judge whether the object 4's boarding of and alighting from the car 18 is successful, on the basis of presence or absence of reception of a message, such as a boarding completion announcement or an alighting completion announcement, by the time of expiration of a predetermined time period since opening of the car door 19 together with a result of the observation by the boarding and alighting observation unit 28. If the equipment server 7 judges a failure in boarding or alighting, the equipment server 7 performs transmission of a message representing a request to abort boarding, a request to abort alighting, or a request to move, transmission of an instruction to cancel dedicated running, giving notification to a manager, or the like, as in Embodiment 2.

For example, the boarding and alighting observation unit 28 obtains position information of the object 4 on the basis of a message periodically received from an object server 9. An equipment control unit 11 judges whether the object 4's boarding of and alighting from the car 18 is successful, on the basis of the position information of the object 4 observed by the boarding and alighting observation unit 28 in, for example, the following manner. The equipment control unit 11 judges that the object 4 is successful in boarding the car 18 when a position of the object 4 moves from the hall 16 to inside the car 18. The equipment control unit 11 judges that the object 4 is unsuccessful in boarding the car 18 if the position of the object 4 does not move to inside the car 18 by the time a predetermined time period elapses since opening of the car door 19. The equipment control unit 11 judges that the object 4 is successful in alighting from the car 18 when the position of the object 4 moves from inside the car 18 to the hall 16. The equipment control unit 11 judges that the object 4 is unsuccessful in alighting from the car 18 if the position of the object 4 does not move to the hall 16 by the time a predetermined time period elapses since opening of the car door 19.

For example, the boarding and alighting observation unit 28 obtains an image of the object 4 which is shot by a camera provided for the elevator through a control panel 20 or the like. The equipment control unit 11 judges whether the object 4's boarding of and alighting from the car 18 is successful, on the basis of the image of the object 4 obtained by the boarding and alighting observation unit 28 in, for example, the following manner. The equipment control unit 11 judges that the object 4 is successful in boarding the car 18 when the equipment control unit 11 obtains an image of the object 4 that has moved to inside the car 18. The equipment control unit 11 judges that the object 4 is unsuccessful in boarding the car 18 if the equipment control unit 11 does not obtain an image of the object 4 that has moved to inside the car 18 by the time a predetermined time period elapses since opening of the car door 19. The equipment control unit 11 judges that the object 4 is successful in alighting from the car 18 when the equipment control unit 11 obtains an image of the object 4 that has moved to the hall 16. The equipment control unit 11 judges that the object 4 is unsuccessful in alighting from the car 18 if the equipment control unit 11 does not obtain an image of the object 4 that has moved to the hall 16 by the time a predetermined time period elapses since opening of the car door 19.

For example, the boarding and alighting observation unit 28 obtains a measurement value of the load on the car 18 from the scale 25 through the control panel 20 or the like. The equipment control unit 11 judges whether the object 4's boarding of and alighting from the car 18 is successful, on the basis of the measurement value of the load on the scale 25 that is obtained by the boarding and alighting observation unit 28 in, for example, the following manner. The equipment control unit 11 judges that the object 4 is successful in boarding the car 18 when there is a predetermined increase in weight in the load on the car 18 while the car door 19 is open. The equipment control unit 11 judges that the object 4 is unsuccessful in boarding the car 18 if there is no predetermined increase in weight in the load on the car 18 by the time a predetermined time period elapses since opening of the car door 19. The equipment control unit 11 judges that the object 4 is successful in alighting from the car 18 when there is a predetermined decrease in weight in the load on the car 18 while the car door 19 is open. The equipment control unit 11 judges that the object 4 is unsuccessful in alighting from the car 18 if there is no predetermined decrease in weight in the load on the car 18 by the time a predetermined time period elapses since opening of the car door 19.

For example, the boarding and alighting observation unit 28 obtains information on presence or absence of detection of passage by the passage detector 27 through the control panel 20 or the like. The equipment control unit 11 judges whether the object 4's boarding of and alighting from the car 18 is successful, on the basis of the presence or absence of detection by the passage detector 27 that is obtained by the boarding and alighting observation unit 28 in, for example, the following manner. The equipment control unit 11 judges that the object 4 is successful in boarding the car 18 when passage of the object 4 from the hall 16 to the car 18 is detected while the car door 19 is open. The equipment control unit 11 judges that the object 4 is unsuccessful in boarding the car 18 if passage of the object 4 from the hall 16 to the car 18 is not detected by the time a predetermined time period elapses since opening of the car door 19. The equipment control unit 11 judges that the object 4 is successful in alighting from the car 18 when passage of the object 4 from the hall 16 to the car 18 is detected while the car door 19 is open. The equipment control unit 11 judges that the object 4 is unsuccessful in alighting from the car 18 if passage of the object 4 from the hall 16 to the car 18 is not detected by the time a predetermined time period elapses since opening of the car door 19.

The equipment control unit 11 may judge whether the object 4's boarding of and alighting from the car 18 is successful by combining a plurality of conditions or switching between a plurality of conditions. The equipment control unit 11 judges whether boarding and alighting is successful on the basis of at least any of, for example, position information of the object 4, an image of the object 4 which is shot by a camera provided for the elevator, a measurement value from the scale 25, or a result of passage detection by the passage detector 27.

As has been described above, in a communication system 1 according to Embodiment 3, the car 18 responds to a hall call of the object 4 that is controlled by the object server 9. The equipment control unit 11 of the equipment server 7 includes the boarding and alighting observation unit 28. The boarding and alighting observation unit 28 observes a status of the object 4 of boarding and alighting from the car 18 of the elevator. The equipment control unit 11 judges whether the object 4 is unsuccessful in boarding the car 18, on the basis of a status of the object 4 of boarding the car 18 which is observed by the boarding and alighting observation unit 28. The equipment control unit 11 transmits a message including third information representing a request to abort boarding the car 18 to the object server 9 if the equipment control unit 11 judges that the object 4 is unsuccessful in boarding the car 18.

The equipment control unit 11 judges whether the object 4 is unsuccessful in alighting from the car 18, on the basis of a status of the object 4 of alighting from the car 18 which is observed by the boarding and alighting observation unit 28. The equipment control unit 11 transmits a message including third information representing a request to abort alighting from the car 18 to the object server 9 if the equipment control unit 11 judges that the object 4 is unsuccessful in alighting from the car 18.

The boarding and alighting observation unit 28 observes a status of the object 4 of boarding or alighting on the basis of at least any of position information of the object 4, presence or absence of detection of passage by the passage detector 27, a measurement value from the scale 25, or an image of the object 4. The position information of the object 4 is stored in association with information on the object 4 that is identified by first information. The passage detector 27 is provided at a doorway to the car 18. The passage detector 27 detects a body which passes through the doorway to the car 18. The scale 25 measures the load on the car 18. An image of the object 4 is shot by a camera which is provided for the elevator.

With the above-described configuration, whether the object 4's boarding of and alighting from the car 18 is successful is judged on the basis of an observation result from the boarding and alighting observation unit 28. This enhances the accuracy of judgment as to whether boarding of and alighting is successful. The equipment control unit 11 may judge whether boarding and alighting is successful by combining, e.g., presence or absence of reception of a boarding completion announcement or alighting completion announcement message. In such a case where judgment is made by combining a plurality of conditions, the accuracy of judgment as to whether boarding and alighting is successful.

### [Industrial Applicability]

A communication system according to the present disclosure can be applied to coordination between a facility and a device working in the facility. An equipment server and a device server according to the present disclosure can be applied to the communication system. A data structure according to the present disclosure can be applied to communication in the communication system.

### [Reference Signs List]

- 1: Communication system
- 2, 2a, 2b: Building
- 3: Piece of building equipment
- 4, 4p, 4q: Object
- 5: Network
- 6: Base station
- 7, 7a, 7b: Equipment server
- 8: Firewall
- 9, 9p, 9q: Object server
- 10: First communication unit
- 11: Equipment control unit
- 12: Object management unit
- 13: Second communication unit
- 14: Object control unit
- 15: Hoistway
- 16: Hall
- 17: Hall door
- 18: Car
- 19: Car door
- 20: Control panel
- 21: Management room
- 22: Management terminal
- 23: Notification unit
- 24: Hall camera
- 25: Scale
- 26: Car camera
- 27: Passage detector
- 28: Boarding and alighting observation unit
- 1a: Hardware
- 1b: Processor
- 1c: Memory

## Claims

1. An equipment server comprising a first communication unit that transmits and receives a message in a common data format to and from a plurality of device servers which communicate with a device in a facility and control the device, and an equipment control unit that controls a piece of equipment in the facility on the basis of the message received by the first communication unit,
wherein the message includes
first information for identification of the device,
second information representing a transmission direction of the message, and
third information representing a process related to the message.

2. The equipment server according to claim 1, wherein
the device is a robot or a mobility device.

3. The equipment server according to claim 1 or 2, wherein
the equipment control unit selects a piece of equipment to be controlled from among a plurality of pieces of equipment in the facility, on the basis of the third information.

4. The equipment server according to any one of claims 1 to 3, wherein
the equipment control unit selects the piece of equipment to be controlled from among the plurality of pieces of equipment in the facility, on the basis of position information of the device which is stored in association with information on the device identified by the first information.

5. The equipment server according to any one of claims 1 to 4, wherein
the equipment control unit causes the piece of equipment to be controlled to start operation if the third information represents a request to start the operation of the piece of equipment.

6. The equipment server according to any one of claims 1 to 5, wherein
the equipment control unit causes the piece of equipment to be controlled to stop the operation if the third information represents a request to stop the operation of the piece of equipment.

7. The equipment server according to any one of claims 1 to 6, wherein
the equipment control unit changes an operating state of the piece of equipment to be controlled if the third information represents a request to change the operating state of the piece of equipment.

8. The equipment server according to any one of claims 1 to 7, wherein
the equipment control unit causes an access control apparatus that is the piece of equipment to be controlled to authenticate the device on the basis of the first information.

9. The equipment server according to any one of claims 1 to 8, wherein
the device is a first device that is controlled by a first device server among the plurality of device servers and moves in the facility, and
the equipment control unit registers, in an elevator that is the piece of equipment to be controlled, a hall call calling a first car of the elevator if the third information represents the hall call.

10. The equipment server according to claim 9, wherein
the equipment control unit identifies a floor, on which the first device is located, on the basis of position information of the first device which is stored in association with information on the first device identified by the first information and registers, in the elevator, the hall call for the identified floor.

11. The equipment server according to claim 9 or 10, wherein
if the elevator has a plurality of cars, the first communication unit includes, in the message, information for identification of the first car that is caused to respond to the hall call of the first device among the plurality of cars and transmits the message to the first device server.

12. The equipment server according to any one of claims 9 to 11, wherein
the first communication unit transmits the message including the third information representing a request to board the first car to the first device server when a door of the first car opens on a start floor of the hall call.

13. The equipment server according to claim 12, wherein
the equipment control unit causes the elevator to close the door of the first car after the equipment control unit transmits the message including the third information representing the request to board to the first device server and when the equipment control unit receives the message including the third information representing completion of boarding of the first car from the first device server.

14. The equipment server according to claim 12 or 13, wherein
if the equipment control unit does not receive the message including the third information representing completion of boarding of the first car from the first device server by the time a predetermined time period elapses since the transmission of the message including the third information representing the request to board to the first device server, the equipment server judges that the first device is unsuccessful in boarding the first car and transmits the message including the third information representing a request to abort boarding the first car to the first device server.

15. The equipment server according to any one of claims 9 to 14, wherein
the equipment control unit
includes a boarding observation unit that observes a status of the device of boarding a car of the elevator, and
judges whether the first device is unsuccessful in boarding the first car on the basis of a status of the first device of boarding the first car which is observed by the boarding observation unit, and transmits the message including the third information representing the request to abort boarding the first car to the first device server if the equipment control unit judges that the first device is unsuccessful in boarding the first car.

16. The equipment server according to claim 15, wherein
the boarding observation unit observes the status of the first device of boarding by at least any of
the position information of the first device stored in association with the information on the first device identified by the first information,
presence or absence of detection by a passage detector that is provided at a doorway to the first car and detects a body passing through the doorway to the first car,
a measurement value from a scale that measures a load on the first car, or
an image of the first device which is shot by a camera that is provided for the elevator.

17. The equipment server according to any one of claims 14 to 16, wherein
the equipment control unit causes the first car to perform dedicated running for the first device when the equipment control unit causes the first car to respond to the hall call, and causes the first car to cancel the dedicated running if the equipment control unit judges that the first device is unsuccessful in boarding the first car.

18. The equipment server according to any one of claims 14 to 17, wherein
the equipment control unit transmits the message including the third information representing a request for the first device to move to a predetermined position outside the first car to the first device server if the equipment control unit judges that the first device is unsuccessful in boarding the first car.

19. The equipment server according to any one of claims 14 to 16, wherein
the equipment control unit causes the first car to perform dedicated running for the first device when the equipment control unit causes the first car to respond to the hall call, transmits the message including the third information representing a request for the first device to move to a predetermined position outside the first car to the first device server if the equipment control unit judges that the first device is unsuccessful in boarding the first car, and causes the first car to cancel the dedicated running when the equipment control unit receives the message including the third information representing completion of movement based on the request to move from the first device server after the transmission.

20. The equipment server according to any one of claims 9 to 19, wherein
the first communication unit transmits the message including the third information representing a request to alight from the first car to the first device server when the door of the first car of the elevator with the first device on board opens on a destination floor of the hall call.

21. The equipment server according to claim 20, wherein
the equipment control unit causes the elevator to close the door of the first car after the equipment control unit transmits the message including the third information representing the request to alight to the first device server and when the equipment control unit receives the message including the third information representing completion of alighting from the first car from the first device server.

22. The equipment server according to claim 20 or 21, wherein
if the equipment control unit does not receive the message including the third information representing completion of alighting from the first car from the first device server by the time a predetermined time period elapses since the transmission of the message including the third information representing the request to alight to the first device server, the equipment control unit judges that the first device is unsuccessful in alighting from the first car and transmits the message including the third information representing a request to abort alighting from the first car to the first device server.

23. The equipment server according to any one of claims 9 to 22, wherein
the equipment control unit
includes an alighting observation unit that observes a status of the device of alighting from a car of the elevator, and
judges whether the first device is unsuccessful in alighting from the first car on the basis of a status of the first device of alighting from the first car which is observed by the alighting observation unit, and transmits the message including the third information representing the request to abort alighting from the first car to the first device server if the equipment control unit judges that the first device is unsuccessful in alighting from the first car.

24. The equipment server according to claim 23, wherein
the alighting observation unit observes the status of the first device of alighting by at least any of
the position information of the first device stored in association with the information on the first device identified by the first information,
presence or absence of detection by the passage detector that is provided at the doorway to the first car and detects the body passing through the doorway to the first car,
a measurement value from the scale that measures the load on the first car, or
an image of the first device which is shot by the camera that is provided for the elevator.

25. The equipment server according to any one of claims 22 to 24, comprising
a notification unit that gives notification of a failure in alighting if the equipment control unit judges that the first device is unsuccessful in alighting from the first car.

26. The equipment server according to any one of claims 1 to 25, wherein
when occurrence of a movement request event that is an event requiring a request for the device to move is detected, the first communication unit transmits the message including the third information representing a request for the device to move appropriate to a type of the movement request event to a device server that controls the device.

27. A device server comprising a second communication unit that transmits and receives a message in a common data format to and from an equipment server that controls a piece of equipment in a facility, and a device control unit that controls a device in the facility on the basis of a message received by the second communication unit,
wherein the message includes
first information for identification of the device,
second information representing a transmission direction of the message, and
third information representing a process related to the message.

28. A communication system comprising an equipment server and a plurality of device servers,
wherein the equipment server includes a first communication unit that transmits and receives a message in a common data format to and from the plurality of device servers, and an equipment control unit that controls a piece of equipment in a facility on the basis of a message received by the first communication unit,
each of the plurality of device servers includes a second communication unit that transmits and receives the message in the common data format to and from the equipment server, and a device control unit that controls a device in the facility on the basis of a message received by the second communication unit, and
the message includes
first information for identification of the device,
second information representing a transmission direction of the message, and
third information representing a process related to the message.

29. A data structure for a message that is to be transmitted and received in a common data format between a plurality of device servers that communicate with a device in a facility and control the device and an equipment server that controls a piece of equipment in the facility, comprising:
first information for identification of the device in the facility;
second information representing a transmission direction of the message; and
third information representing a process to be executed by a control target in the message.
